(19) Europäisches Patentamt
European Patent Office
Office européen des brevets

(11) EP 3 174 258 A1

(12) EUROPEAN PATENT APPLICATION
published in accordance with Art. 153(4) EPC

(43) Date of publication:
31.05.2017 Bulletin 2017/22

(51) Int Cl.:
*H04L 27/26* (2006.01)

(21) Application number: 14899992.3

(22) Date of filing: 21.08.2014

(86) International application number:
PCT/CN2014/084902

(87) International publication number:
WO 2016/026115 (25.02.2016 Gazette 2016/08)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Huawei Technologies Co. Ltd.
Shenzhen, Guangdong 518129 (CN)

(72) Inventor: CHEN, Lei
Shenzhen
Guangdong 518129 (CN)

(74) Representative: Pfenning, Meinig & Partner mbB
Patent- und Rechtsanwälte
Joachimsthaler Straße 12
10719 Berlin (DE)

(54) METHOD AND APPARATUS FOR GENERATING AND PROCESSING FREQUENCY DIVISION MULTIPLE WAVEFORM SIGNAL

(57) Embodiments of the present invention relate to the field of communications technologies, and disclose methods for generating and processing a frequency division multi-waveform signal, and apparatuses, which enable one system to support multiple multicarrier technologies at the same time. The method for generating a frequency division multi-waveform signal provided in the embodiments of the present invention includes: mapping first-type to-be-sent data streams to subcarriers corresponding to a first waveform component to generate M frequency domain symbols, and mapping second-type to-be-sent data streams to subcarriers corresponding to a second waveform component to generate N frequency domain symbols, where M and N are both positive integers; performing frequency domain filtering on the M frequency domain symbols and the N frequency domain symbols; and generating a time domain signal from the M frequency-domain-filtered frequency domain symbols and the N frequency-domain-filtered frequency domain symbols.

Map first-type to-be-sent data streams to subcarriers corresponding to a first waveform component to generate M frequency domain symbols, and map second-type to-be-sent data streams to subcarriers corresponding to a second waveform component to generate N frequency domain symbols, where M and N are both positive integers
— 101

Perform frequency domain filtering on the M frequency domain symbols and the N frequency domain symbols
— 102

Generate a time domain signal from the M frequency-domain-filtered frequency domain symbols and the N frequency-domain-filtered frequency domain symbols
— 103

FIG. 1

## Description

## TECHNICAL FIELD

The present invention relates to the communications field, and in particular, to methods for generating and processing a frequency division multi-waveform signal, and apparatuses.

## BACKGROUND

Multi-carrier modulation technologies are widely used by virtue of an excellent feature to resist frequency selective fading. Common multi-carrier technologies include a filter bank multicarrier (Filter Bank Multicarrier, FBMC for short) technology, an orthogonal frequency division multiplexing (Orthogonal Frequency Division Multiplexing, OFDM for short) technology, and the like. Currently, one system can support only one multicarrier technology but cannot support multiple multicarrier technologies at the same time.

## SUMMARY

Embodiments of the present invention provide methods for generating and processing a frequency division multi-waveform signal, and apparatuses, which enable one system to support multiple multicarrier technologies at the same time.

To achieve the foregoing objective, the following technical solutions are used in the embodiments of the present invention:

According to a first aspect, a method for generating a frequency division multi-waveform signal is provided, including:

mapping first-type to-be-sent data streams to subcarriers corresponding to a first waveform component to generate M frequency domain symbols, and mapping second-type to-be-sent data streams to subcarriers corresponding to a second waveforms component to generate N frequency domain symbols, where M and N are both positive integers; performing frequency domain filtering on the M frequency domain symbols and the N frequency domain symbols; and generating a time domain signal from the M frequency-domain-filtered frequency domain symbols and the N frequency-domain-filtered frequency domain symbols.

With reference to the first aspect, in a first possible implementation manner, the first waveform component is a first filter bank multicarrier FBMC waveform component and the second waveform component is a second FBMC waveform component.

With reference to the first aspect or the first possible implementation manner of the first aspect, in a second possible implementation manner, the generating a time domain signal from the M frequency-domain-filtered frequency domain symbols and the N frequency-domain-filtered frequency domain symbols includes:

generating a time domain signal containing L time domain symbols from the M frequency-domain-filtered frequency domain symbols and the N frequency-domain-filtered frequency domain symbols, where L is less than or equal to a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

With reference to the second possible implementation manner of the first aspect, in a third possible implementation manner, L is a positive integer greater than 1, and the generating a time domain signal containing L time domain symbols from the M frequency-domain-filtered frequency domain symbols and the N frequency-domain-filtered frequency domain symbols includes:

performing an inverse Fourier transform on the M frequency-domain-filtered frequency domain symbols and the N frequency-domain-filtered frequency domain symbols to generate the L time domain symbols; performing a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, where the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that includes the any waveform related to the $a^{th}$ time domain symbol; and performing a superposition operation on the first time domain symbol and the L-1 shifted time domain symbols of the L time domain symbols to generate the time domain signal.

With reference to any one of the first aspect or the first possible implementation manner to the third possible implementation manner of the first aspect, in a fourth possible implementation manner, a subcarrier interval corresponding to the first waveform component is different from a subcarrier interval corresponding to the second waveform.

With reference to any one of the first aspect or the first possible implementation manner to the fourth possible implementation manner of the first aspect, in a fifth possible implementation manner, the subcarriers corresponding to the first waveform component and the subcarriers corresponding to the second waveform component are different basic subcarriers in a same basic subcarrier group.

With reference to the fifth possible implementation manner of the first aspect, in a sixth possible implementation manner, there is an interval of at least r1+r2-1 basic subcarriers between the subcarriers corresponding to the first waveform component and the subcarriers corresponding to the second waveform component, where r1 is a positive integer indicating that the subcarrier interval corresponding to the first waveform component is equivalent to an interval of r1 basic subcarriers, and r2 is a positive integer indicating that the subcarrier interval corresponding to the second waveform component is equivalent to an interval of r2 basic subcarriers.

With reference to the fifth possible implementation manner or the sixth possible implementation manner of the first aspect, in a seventh possible implementation manner, the first waveform component is a first filter bank multicarrier FBMC waveform component, and a subcarrier interval corresponding to the first FBMC waveform component is an interval of r basic subcarriers, where r is an overlap coefficient of a prototype filter corresponding to the first FBMC waveform component, and r is a positive integer.

With reference to the third possible implementation manner of the first aspect, in an eighth possible implementation manner, the method further includes sending shift operation information to a receive side.

According to a second aspect, a method for processing a frequency division multi-waveform signal is provided, including:

determining a receive time point of a time domain signal including a first waveform component and a second waveform component;
receiving the time domain signal according to the receive time point;
generating a frequency domain signal from the time domain signal;
performing frequency domain filtering on data on all subcarriers of the frequency domain signal to obtain M frequency domain symbols corresponding to the first waveform component and N frequency domain symbols corresponding to the second waveform component, where M and N are both positive integers; and
performing signal detection on the M frequency domain symbols and the N frequency domain symbols to obtain information carried in the time domain signal.

With reference to the second aspect, in a first possible implementation manner, the first waveform component is a first filter bank multicarrier FBMC waveform component and the second waveform component is a second FBMC waveform component.

With reference to the first possible implementation manner of the second aspect, in a second possible implementation manner, the performing frequency domain filtering on data on all subcarriers of the frequency domain signal to obtain M frequency domain symbols corresponding to the first waveform component and N frequency domain symbols corresponding to the second waveform component includes:

performing frequency domain filtering on data on subcarriers corresponding to the first FBMC waveform component by using a prototype filter corresponding to the first FBMC waveform component, to obtain the M frequency domain symbols corresponding to the first FBMC waveform component; and
performing frequency domain filtering on data on subcarriers corresponding to the second FBMC waveform component by using a prototype filter corresponding to the second FBMC waveform component, to obtain the N frequency domain symbols corresponding to the second FBMC waveform component.

With reference to any one of the second aspect, the first possible implementation manner of the second aspect, or the second possible implementation manner of the second aspect, in a third possible implementation manner, before the determining a receive time point of a time domain signal including a first waveform component and a second waveform component, the method further includes:

receiving shift operation information regarding the time domain signal including the first waveform component and the second waveform component, where the shift operation information is sent by a transmit side; and
the determining a receive time point of a time domain signal including a first waveform component and a second waveform component includes:

determining the receive time point of the time domain signal according to the shift operation information.

According to a third aspect, a method for generating a frequency division multi-waveform signal is provided, including:

mapping first-type to-be-sent data streams to subcarriers corresponding to a first waveform component to generate M frequency domain symbols, and mapping second-type to-be-sent data streams to subcarriers corresponding to a second waveform component to generate N frequency domain symbols, where M and N are both positive integers; performing frequency domain filtering on the N frequency domain symbols; and generating a time domain signal from the M frequency domain symbols and the N frequency-domain-filtered frequency domain symbols.

With reference to the third aspect, in a first possible implementation manner, the first waveform component is an orthogonal frequency division multiplexing OFDM waveform component and the second waveform component is a filter bank multicarrier FBMC waveform component.

With reference to the first possible implementation manner of the third aspect, in a second possible implementation manner, a subcarrier interval corresponding to the FBMC waveform component is an integer multiple of a subcarrier interval corresponding to the OFDM waveform component.

With reference to any one of the third aspect, the first possible implementation manner of the third aspect, or the second possible implementation manner of the third aspect, in a third possible implementation manner, the generating a time domain signal from the M frequency domain symbols and the N frequency-domain-filtered frequency domain symbols includes:

generating a time domain signal containing L time domain symbols from the M frequency domain symbols and the N frequency-domain-filtered frequency domain symbols, where L is less than a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

With reference to the third possible implementation manner of the third aspect, in a fourth possible implementation manner, L is a positive integer greater than 1, and the generating a time domain signal from the M frequency domain symbols and the N frequency-domain-filtered frequency domain symbols includes:

performing an inverse Fourier transform on the M frequency domain symbols and the N frequency-domain-filtered frequency domain symbols to generate the L time domain symbols; performing a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, where the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that includes the any waveform related to the $a^{th}$ time domain symbol; and performing a superposition operation on the first time domain symbol and the L-1 shifted time domain symbols of the L time domain symbols to generate the time domain signal.

With reference to any one of the third aspect or the first possible implementation manner to the fourth possible implementation manner of the third aspect, in a fifth possible implementation manner, the subcarriers corresponding to the first waveform component and the subcarriers corresponding to the second waveform component are different basic subcarriers in a same basic subcarrier group.

With reference to the fifth possible implementation manner of the third aspect, in a sixth possible implementation manner, there is an interval of at least r1+r2-1 basic subcarriers between the subcarriers corresponding to the first waveform component and the subcarriers corresponding to the second waveform component, where r1 is a positive integer indicating that a subcarrier interval corresponding to the first waveform component is equivalent to an interval of r1 basic subcarriers, and r2 is a positive integer indicating that a subcarrier interval corresponding to the second waveform component is equivalent to an interval of r2 basic subcarriers.

With reference to the fifth possible implementation manner or the sixth possible implementation manner of the third aspect, in a seventh possible implementation manner, the first waveform component is an orthogonal frequency division multiplexing OFDM waveform component, and a subcarrier interval corresponding to the OFDM waveform component is an interval of one basic subcarrier; or the second waveform component is a filter bank multicarrier FBMC waveform component, and a subcarrier interval corresponding to the FBMC waveform component is an interval of r basic subcarriers, where r is an overlap coefficient of a prototype filter corresponding to the FBMC waveform component, and r is a positive integer.

With reference to the fourth possible implementation manner of the third aspect, in an eighth possible implementation manner, the method further includes sending shift operation information to a receive side.

According to a fourth aspect, a method for processing a frequency division multi-waveform signal is provided, including:

determining a receive time point of a time domain signal including a first waveform component and a second waveform component;

receiving the time domain signal according to the receive time point;

generating a frequency domain signal from the time domain signal, where the frequency domain signal includes M frequency domain symbols corresponding to the first waveform component;

performing frequency domain filtering on data on subcarriers corresponding to the second waveform component of the frequency domain signal, to obtain N frequency domain symbols corresponding to the second waveform component; and

performing signal detection on the M frequency domain symbols and the N frequency-domain-filtered frequency domain symbols to obtain information carried in the time domain signal.

With reference to the fourth aspect, in a first possible implementation manner, the first waveform component is an orthogonal frequency division multiplexing OFDM waveform component and the second waveform component is a filter bank multicarrier FBMC waveform component.

With reference to the fourth aspect or the first possible implementation manner of the fourth aspect, in a second possible implementation manner, before the determining a receive time point of a time domain signal including a first waveform component and a second waveform component, the method further includes:

receiving shift operation information regarding the time domain signal including the first waveform component and the second waveform component, where the shift operation information is sent by a transmit side; and

the determining a receive time point of a time domain signal including a first waveform component and a second waveform component includes:

determining the receive time point of the time domain signal according to the shift operation information.

According to a fifth aspect, a transmit side device is provided, including:

a mapping unit, configured to map first-type to-be-sent data streams to subcarriers corresponding to a first waveform component to generate M frequency domain symbols, and map second-type to-be-sent data streams to subcarriers corresponding to a second waveform component to generate N frequency domain symbols, where M and N are both positive integers;

a frequency domain filtering unit, configured to perform frequency domain filtering on the M frequency domain symbols and the N frequency domain symbols; and

a generation unit, configured to generate a time domain signal from the M frequency-domain-filtered frequency domain symbols and the N frequency-domain-filtered frequency domain symbols.

With reference to the fifth aspect, in a first possible implementation manner, the first waveform component is a first filter bank multicarrier FBMC waveform component and the second waveform component is a second FBMC waveform component.

With reference to the fifth aspect or the first possible implementation manner of the fifth aspect, in a second possible implementation manner, the generation unit is specifically configured to generate a time domain signal containing L time domain symbols from the M frequency-domain-filtered frequency domain symbols and the N frequency-domain-filtered frequency domain symbols, where L is less than or equal to a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

With reference to the second possible implementation manner of the fifth aspect, in a third possible implementation manner, L is a positive integer greater than 1, and the generation unit is specifically configured to:

perform an inverse Fourier transform on the M frequency-domain-filtered frequency domain symbols and the N frequency-domain-filtered frequency domain symbols to generate the L time domain symbols;

perform a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, where the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that includes the any waveform related to the $a^{th}$ time domain symbol; and

perform a superposition operation on the first time domain symbol and the L-1 shifted time domain symbols of the L time domain symbols to generate the time domain signal.

With reference to any one of the fifth aspect or the first possible implementation manner to the third possible implementation manner of the fifth aspect, in a fourth possible implementation manner, a subcarrier interval corresponding to the first waveform component is different from a subcarrier interval corresponding to the second waveform.

With reference to any one of the fifth aspect or the first possible implementation manner to the fourth possible implementation manner of the fifth aspect, in a fifth possible implementation manner, the subcarriers corresponding to the first waveform component and the subcarriers corresponding to the second waveform component are different basic subcarriers in a same basic subcarrier group.

With reference to the fifth possible implementation manner of the fifth aspect, in a sixth possible implementation manner, there is an interval of at least r1+r2-1 basic subcarriers between the subcarriers corresponding to the first waveform component and the subcarriers corresponding to the second waveform component, where r1 is a positive integer indicating that the subcarrier interval corresponding to the first waveform component is equivalent to an interval of r1 basic subcarriers, and r2 is a positive integer indicating that the subcarrier interval corresponding to the second waveform component is equivalent to an interval of r2 basic subcarriers.

With reference to the fifth possible implementation manner or the sixth possible implementation manner of the fifth aspect, in a seventh possible implementation manner, the first waveform component is a first filter bank multicarrier FBMC waveform component, and a subcarrier interval corresponding to the first FBMC waveform component is an interval of r basic subcarriers, where r is an overlap coefficient of a prototype filter corresponding to the first FBMC waveform component, and r is a positive integer.

With reference to the third possible implementation manner of the fifth aspect, in an eighth possible implementation manner, the transmit side device further includes:

a sending unit, configured to send shift operation information to a receive side.

According to a sixth aspect, a receive side device is provided, including:

a determining unit, configured to determine a receive time point of a time domain signal including a first waveform component and a second waveform component;
a receiving unit, configured to receive the time domain signal according to the receive time point;
a generation unit, configured to generate a frequency domain signal from the time domain signal;
a frequency domain filtering unit, configured to perform frequency domain filtering on data on all subcarriers of the frequency domain signal to obtain M frequency domain symbols corresponding to the first waveform component and N frequency domain symbols corresponding to the second waveform component, where M and N are both positive integers; and
a signal detection unit, configured to perform signal detection on the M frequency domain symbols and the N frequency domain symbols to obtain information carried in the time domain signal.

With reference to the sixth aspect, in a first possible implementation manner, the first waveform component is a first filter bank multicarrier FBMC waveform component and the second waveform component is a second FBMC waveform component.

With reference to the first possible implementation manner of the sixth aspect, in a second possible implementation manner, the frequency domain filtering unit is specifically configured to:

perform frequency domain filtering on data on subcarriers corresponding to the first FBMC waveform component by using a prototype filter corresponding to the first FBMC waveform component, to obtain the M frequency domain symbols corresponding to the first FBMC waveform component; and
perform frequency domain filtering on data on subcarriers corresponding to the second FBMC waveform component by using a prototype filter corresponding to the second FBMC waveform component, to obtain the N frequency domain symbols corresponding to the second FBMC waveform component.

With reference to any one of the sixth aspect, the first possible implementation manner of the sixth aspect, or the second possible implementation manner of the sixth aspect, in a third possible implementation manner,
the receiving unit is further configured to receive shift operation information regarding the time domain signal including the first waveform component and the second waveform component, where the shift operation information is sent by a transmit side; and
the determining unit is specifically configured to determine the receive time point of the time domain signal according to the shift operation information.

According to a seventh aspect, a transmit side device is provided, including:

a mapping unit, configured to map first-type to-be-sent data streams to subcarriers corresponding to a first waveform component to generate M frequency domain symbols, and map second-type to-be-sent data streams to subcarriers corresponding to a second waveform component to generate N frequency domain symbols, where M and N are both positive integers;
a frequency domain filtering unit, configured to perform frequency domain filtering on the N frequency domain symbols; and

a generation unit, configured to generate a time domain signal from the M frequency domain symbols and the N frequency-domain-filtered frequency domain symbols.

With reference to the seventh aspect, in a first possible implementation manner, the first waveform component is an orthogonal frequency division multiplexing OFDM waveform component and the second waveform component is a filter bank multicarrier FBMC waveform component.

With reference to the first possible implementation manner of the seventh aspect, in a second possible implementation manner, a subcarrier interval corresponding to the FBMC waveform component is an integer multiple of a subcarrier interval corresponding to the OFDM waveform component.

With reference to any one of the seventh aspect, the first possible implementation manner of the seventh aspect, or the second possible implementation manner of the seventh aspect, in a third possible implementation manner, the generation unit is specifically configured to generate a time domain signal containing L time domain symbols from the M frequency domain symbols and the N frequency-domain-filtered frequency domain symbols, where L is less than a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

With reference to the third possible implementation manner of the seventh aspect, in a fourth possible implementation manner, L is a positive integer greater than 1, and the generation unit is specifically configured to:

perform an inverse Fourier transform on the M frequency domain symbols and the N frequency-domain-filtered frequency domain symbols to generate the L time domain symbols;
perform a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, where the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that includes the any waveform related to the $a^{th}$ time domain symbol; and

perform a superposition operation on the first time domain symbol and the L-1 shifted time domain symbols of the L time domain symbols to generate the time domain signal.

With reference to any one of the seventh aspect or the first possible implementation manner to the fourth possible implementation manner of the seventh aspect, in a fifth possible implementation manner, the subcarriers corresponding to the first waveform component and the subcarriers corresponding to the second waveform component are different basic subcarriers in a same basic subcarrier group.

With reference to the fifth possible implementation manner of the seventh aspect, in a sixth possible implementation manner, there is an interval of at least r1+r2-1 basic subcarriers between the subcarriers corresponding to the first waveform component and the subcarriers corresponding to the second waveform component, where r1 is a positive integer indicating that a subcarrier interval corresponding to the first waveform component is equivalent to an interval of r1 basic subcarriers, and r2 is a positive integer indicating that a subcarrier interval corresponding to the second waveform component is equivalent to an interval of r2 basic subcarriers.

With reference to the fifth possible implementation manner or the sixth possible implementation manner of the seventh aspect, in a seventh possible implementation manner, the first waveform component is an orthogonal frequency division multiplexing OFDM waveform component, and a subcarrier interval corresponding to the OFDM waveform component is an interval of one basic subcarrier; or the second waveform component is a filter bank multicarrier FBMC waveform component, and a subcarrier interval corresponding to the FBMC waveform component is an interval of r basic subcarriers, where r is an overlap coefficient of a prototype filter corresponding to the FBMC waveform component, and r is a positive integer.

With reference to the fourth possible implementation manner of the seventh aspect, in an eighth possible implementation manner, the transmit side device further includes: a transmitter, configured to send shift operation information to a receive side.

According to an eighth aspect, a receive side device is provided, including:

a determining unit, configured to determine a receive time point of a time domain signal including a first waveform component and a second waveform component;
a receiving unit, configured to receive the time domain signal according to the receive time point;
a generation unit, configured to generate a frequency domain signal from the time domain signal, where the frequency domain signal includes M frequency domain symbols corresponding to the first waveform component;

a frequency domain filtering unit, configured to perform frequency domain filtering on data on subcarriers corresponding to the second waveform component of the frequency domain signal, to obtain N frequency domain symbols corresponding to the second waveform component; and
a signal detection unit, configured to perform signal detection on the M frequency domain symbols and the N frequency-domain-filtered frequency domain symbols to obtain information carried in the time domain signal.

With reference to the eighth aspect, in a first possible implementation manner, the first waveform component is an orthogonal frequency division multiplexing OFDM waveform component and the second waveform component is a filter bank multicarrier FBMC waveform component.

With the eighth aspect or the first possible implementation manner of the eighth aspect, in a second possible implementation manner, the receiving unit is further configured to receive shift operation information regarding the time domain signal including the first waveform component and the second waveform component, where the shift operation information is sent by a transmit side; and
the determining unit is specifically configured to determine the receive time point of the time domain signal according to the shift operation information.

According to a ninth aspect, a transmit side device is provided, including a memory and a processor, where the memory is configured to store a set of code, and the code is used to control the processor to execute the following actions:

mapping first-type to-be-sent data streams to subcarriers corresponding to a first waveform component to generate M frequency domain symbols, and mapping second-type to-be-sent data streams to subcarriers corresponding to a second waveform component to generate N frequency domain symbols, where M and N are both positive integers;
performing frequency domain filtering on the M frequency domain symbols and the N frequency domain symbols; and
generating a time domain signal from the M frequency-domain-filtered frequency domain symbols and the N frequency-domain-filtered frequency domain symbols.

With reference to the ninth aspect, in a first possible implementation manner, the first waveform component is a first filter bank multicarrier FBMC waveform component and the second waveform component is a second FBMC waveform component.

With reference to the ninth aspect or the first possible implementation manner of the ninth aspect, in a second possible implementation manner, the processor is specifically configured to generate a time domain signal containing L time domain symbols from the M frequency-domain-filtered frequency domain symbols and the N frequency-domain-filtered frequency domain symbols, where L is less than or equal to a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

With reference to the second possible implementation manner of the ninth aspect, in a third possible implementation manner, L is a positive integer greater than 1, and the processor is specifically configured to:

perform an inverse Fourier transform on the M frequency-domain-filtered frequency domain symbols and the N frequency-domain-filtered frequency domain symbols to generate the L time domain symbols;
perform a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, where the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that includes the any waveforms related to the $a^{th}$ time domain symbol; and
perform a superposition operation on the first time domain symbol and the L-1 shifted time domain symbols of the L time domain symbols to generate the time domain signal.

With reference to any one of the ninth aspect or the first possible implementation manner to the third possible implementation manner of the ninth aspect, in a fourth possible implementation manner, a subcarrier interval corresponding to the first waveform component is different from a subcarrier interval corresponding to the second waveform.

With reference to any one of the ninth aspect or the first possible implementation manner to the fourth possible implementation manner of the ninth aspect, in a fifth possible implementation manner, the subcarriers corresponding to the first waveform component and the subcarriers corresponding to the second waveform component are different basic subcarriers in a same basic subcarrier group.

With reference to the fifth possible implementation manner of the ninth aspect, in a sixth possible implementation manner, there is an interval of at least r1+r2-1 basic subcarriers between the subcarriers corresponding to the first waveform component and the subcarriers corresponding to the second waveform component, where r1 is a positive integer indicating that the subcarrier interval corresponding to the first waveform component is equivalent to an interval of r1 basic subcarriers, and r2 is a positive integer indicating that the subcarrier interval corresponding to the second waveform component is equivalent to an interval of r2 basic subcarriers.

With reference to the fifth possible implementation manner or the sixth possible implementation manner of the ninth aspect, in a seventh possible implementation manner, the first waveform component is a first filter bank multicarrier FBMC waveform component, and a subcarrier interval corresponding to the first FBMC waveform component is an interval of r basic subcarriers, where r is an overlap coefficient of a prototype filter corresponding to the first FBMC waveform component, and r is a positive integer.

With reference to the third possible implementation manner of the ninth aspect, in an eighth possible implementation manner, the transmit side device further includes:

a transmitter, configured to send shift operation information to a receive side.

According to a tenth aspect, a receive side device is provided, including a memory and a processor, where the memory is configured to store a set of code, and the code is used to control the processor to execute the following actions:

determining a receive time point of a time domain signal including a first waveform component and a second waveform component;
receiving the time domain signal according to the receive time point;
generating a frequency domain signal from the time domain signal;
performing frequency domain filtering on data on all subcarriers of the frequency domain signal to obtain M frequency domain symbols corresponding to the first waveform component and N frequency domain symbols corresponding to the second waveform component, where M and N are both positive integers; and
performing signal detection on the M frequency domain symbols and the N frequency domain symbols to obtain information carried in the time domain signal.

With reference to the tenth aspect, in a first possible implementation manner, the first waveform component is a first filter bank multicarrier FBMC waveform component and the second waveform component is a second FBMC waveform component.

With reference to the first possible implementation manner of the tenth aspect, in a second possible implementation manner, the processor is specifically configured to:

perform frequency domain filtering on data on subcarriers corresponding to the first FBMC waveform component by using a prototype filter corresponding to the first FBMC waveform component, to obtain the M frequency domain symbols corresponding to the first FBMC waveform component; and
perform frequency domain filtering on data on subcarriers corresponding to the second FBMC waveform component by using a prototype filter corresponding to the second FBMC waveform component, to obtain the N frequency domain symbols corresponding to the second FBMC waveform component.

With reference to any one of the tenth aspect, the first possible implementation manner of the tenth aspect, or the second possible implementation manner of the tenth aspect, in a third possible implementation manner, the receive side device further includes:

a receiver, configured to receive shift operation information regarding the time domain signal including the first waveform component and the second waveform component, where the shift operation information is sent by a transmit side; and
the processor is specifically configured to determine the receive time point of the time domain signal according to the shift operation information.

According to an eleventh aspect, a transmit side device is provided, including a memory and a processor, where the memory is configured to store a set of code, and the code is used to control the processor to execute the following actions:

mapping first-type to-be-sent data streams to subcarriers corresponding to a first waveform component to generate M frequency domain symbols, and mapping second-type to-be-sent data streams to subcarriers corresponding to a second waveform component to generate N frequency domain symbols, where M and N are both positive integers;
performing frequency domain filtering on the N frequency domain symbols; and
generating a time domain signal from the M frequency domain symbols and the N frequency-domain-filtered frequency domain symbols.

With reference to the eleventh aspect, in a first possible implementation manner, the first waveform component is an orthogonal frequency division multiplexing OFDM waveform component and the second waveform component is a filter bank multicarrier FBMC waveform component.

With reference to the first possible implementation manner of the eleventh aspect, in a second possible implementation manner, a subcarrier interval corresponding to the FBMC waveform component is an integer multiple of a subcarrier interval corresponding to the OFDM waveform component.

With reference to any one of the eleventh aspect, the first possible implementation manner of the eleventh aspect, or the second possible implementation manner of the eleventh aspect, in a third possible implementation manner, the processor is specifically configured to generate a time domain signal containing L time domain symbols from the M frequency domain symbols and the N frequency-domain-filtered frequency domain symbols, where L is less than a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

With reference to the third possible implementation manner of the eleventh aspect, in a fourth possible implementation manner, L is a positive integer greater than 1, and the processor is specifically configured to:

perform an inverse Fourier transform on the M frequency domain symbols and the N frequency-domain-filtered frequency domain symbols to generate the L time domain symbols;

perform a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, where the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that includes the any waveform related to the $a^{th}$ time domain symbol; and

perform a superposition operation on the first time domain symbol and the L-1 shifted time domain symbols of the L time domain symbols to generate the time domain signal.

With reference to any one of the eleventh aspect or the first possible implementation manner to the fourth possible implementation manner of the eleventh aspect, in a fifth possible implementation manner, the subcarriers corresponding to the first waveform component and the subcarriers corresponding to the second waveform component are different basic subcarriers in a same basic subcarrier group.

With reference to the fifth possible implementation manner of the eleventh aspect, in a sixth possible implementation manner, there is an interval of at least r1+r2-1 basic subcarriers between the subcarriers corresponding to the first waveform component and the subcarriers corresponding to the second waveform component, where r1 is a positive integer indicating that a subcarrier interval corresponding to the first waveform component is equivalent to an interval of r1 basic subcarriers, and r2 is a positive integer indicating that a subcarrier interval corresponding to the second waveform component is equivalent to an interval of r2 basic subcarriers.

With reference to the fifth possible implementation manner or the sixth possible implementation manner of the eleventh aspect, in a seventh possible implementation manner, the first waveform component is an orthogonal frequency division multiplexing OFDM waveform component, and a subcarrier interval corresponding to the OFDM waveform component is an interval of one basic subcarrier; or the second waveform component is a filter bank multicarrier FBMC waveform component, and a subcarrier interval corresponding to the FBMC waveform component is an interval of r basic subcarriers, where r is an overlap coefficient of a prototype filter corresponding to the FBMC waveform component, and r is a positive integer.

With reference to the fourth possible implementation manner of the eleventh aspect, in an eighth possible implementation manner, the transmit side device further includes: a sending unit, configured to send shift operation information to a receive side.

According to a twelfth aspect, a receive side device is provided, including a memory and a processor, where the memory is configured to store a set of code, and the code is used to control the processor to execute the following actions:

determining a receive time point of a time domain signal including a first waveform component and a second waveform component;

receiving the time domain signal according to the receive time point;

generating a frequency domain signal from the time domain signal, where the frequency domain signal includes M frequency domain symbols corresponding to the first waveform component;

performing frequency domain filtering on data on subcarriers corresponding to the second waveform component of the frequency domain signal, to obtain N frequency domain symbols corresponding to the second waveform component; and

performing signal detection on the M frequency domain symbols and the N frequency-domain-filtered frequency domain symbols to obtain information carried in the time domain signal.

With reference to the twelfth aspect, in a first possible implementation manner, the first waveform component is an orthogonal frequency division multiplexing OFDM waveform component and the second waveform component is a filter bank multicarrier FBMC waveform component.

With reference to the twelfth aspect or the first possible implementation manner of the twelfth aspect, in a second possible implementation manner, the receive side device further includes:

a receiver, configured to receive shift operation information regarding the time domain signal including the first waveform component and the second waveform component, where the shift operation information is sent by a transmit side; and
the processor is specifically configured to determine the receive time point of the time domain signal according to the shift operation information.

The methods for generating and processing a frequency division multi-waveform signal, and the apparatuses provided in the embodiments of the present invention enable multiple waveforms to be used in one system. Specifically, one transmit side can be used to implement multiple waveforms at the same time. This is, one system can be enabled to support multiple multicarrier technologies.

BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1 is a schematic flowchart of a method for generating a frequency division multi-waveform signal according to Embodiment 1 of the present invention;
FIG. 2 is a schematic flowchart of a method for generating a frequency division multi-waveform signal according to Embodiment (1) of the present invention;
FIG. 3 is a schematic diagram of a frequency domain relationship between a first FBMC waveform component and a second FBMC waveform component, based on example 1 according to Embodiment (1) of the present invention;
FIG. 4 is a schematic diagram of mapping based on example 1 according to Embodiment (1) of the present invention;
FIG. 5 is a distribution diagram of frequency domain symbols and start time points of single-waveform component time domain symbols, based on example 1 according to Embodiment (1) of the present invention;
FIG. 6 is a schematic diagram of a frequency domain symbol obtained after frequency domain filtering, based on example 1 according to Embodiment (1) of the present invention;
FIG. 7 is a schematic diagram of a frequency domain symbol obtained after frequency domain filtering, based on example 1 according to Embodiment (1) of the present invention;
FIG. 8 is a schematic diagram of L frequency division multi-waveform time domain symbols based on example 1 according to Embodiment (1) of the present invention;
FIG. 9 is a schematic diagram of L shifted frequency division multi-waveform time domain symbols based on example 1 according to Embodiment (1) of the present invention;
FIG. 10 is a schematic diagram of a time domain signal based on example 1 according to Embodiment (1) of the present invention;
FIG. 11 is a distribution diagram of frequency domain symbols and start time points of single-waveform component time domain symbols, based on example 2 according to Embodiment (1) of the present invention;
FIG. 12 is a schematic diagram of L frequency division multi-waveform time domain symbols based on example 2 according to Embodiment (1) of the present invention;
FIG. 13 is a schematic diagram of L shifted frequency division multi-waveform time domain symbols based on example 2 according to Embodiment (1) of the present invention;
FIG. 14 is a schematic flowchart of a method for processing a frequency division multi-waveform signal according to Embodiment 2 of the present invention;
FIG. 15 is a schematic flowchart of a method for generating a frequency division multi-waveform signal according to Embodiment 3 of the present invention;
FIG. 16 is a schematic flowchart of a method for generating a frequency division multi-waveform signal according to Embodiment (2) of the present invention;
FIG. 17 is a schematic diagram of a frequency domain relationship between an FBMC waveform component and an OFDM waveform component, based on example 3 according to Embodiment (2) of the present invention;
FIG. 18 is a distribution diagram of frequency domain symbols and start time points of single-waveform component time domain symbols, based on example 3 according to Embodiment (2) of the present invention;
FIG. 19 is a schematic diagram of an OFDM frequency domain symbol and an filtered FBMC frequency domain symbol, based on example 3 according to Embodiment (2) of the present invention;
FIG. 20 is a schematic diagram of a filtered FBMC frequency domain symbol based on example 3 according to Embodiment (2) of the present invention;
FIG. 21 is a schematic diagram of L frequency division multi-waveform time domain symbols based on example 3 according to Embodiment (2) of the present invention;
FIG. 22 is a schematic diagram of L shifted frequency division multi-waveform time domain symbols based on example 3 according to Embodiment (2) of the present invention;
FIG. 23 is a schematic flowchart of a method for processing a frequency division multi-waveform signal according to Embodiment 4 of the present invention;
FIG. 24 is a schematic structural diagram of a transmit side device according to Embodiment 5 of the present invention;
FIG. 25 is a schematic structural diagram of another transmit side device according to Embodiment 5 of the present invention;
FIG. 26 is a schematic structural diagram of a transmit side device according to Embodiment 6 of the present invention;
FIG. 27 is a schematic structural diagram of another transmit side device according to Embodiment 6 of the present invention;
FIG. 28 is a schematic structural diagram of a receive side device according to Embodiment 7 of the present invention;
FIG. 29 is a schematic structural diagram of a receive side device according to Embodiment 8 of the present invention;
FIG. 30 is a schematic structural diagram of a transmit side device according to Embodiment 9 of the present invention;
FIG. 31 is a schematic structural diagram of another transmit side device according to Embodiment 9 of the present invention;
FIG. 32 is a schematic structural diagram of a transmit side device according to Embodiment 10 of the present invention;
FIG. 33 is a schematic structural diagram of another transmit side device according to Embodiment 10 of the present invention;
FIG. 34 is a schematic structural diagram of a receive side device according to Embodiment 11 of the present invention; and
FIG. 35 is a schematic structural diagram of a receive side device according to Embodiment 12 of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

"Time domain symbols of a single waveform component" in this specification refer to time domain symbols generated in a system that supports only one waveform component, and may specifically include time domain symbols of a first waveform component or time domain symbols of a second waveform component. "Frequency division multi-waveform time domain symbols" refer to time domain symbols generated in a system that supports multiple waveform components. It should be noted that multiple waveform components in one system that are described in this specification are separately processed in a frequency domain. Therefore, for one waveform component, frequency domain symbols generated in a system that supports only one waveform component are the same as frequency domain symbols generated in a system that supports multiple waveform components, and both may be called frequency domain symbols of the waveform component.

Methods for generating and processing a frequency division multi-waveform signal, and apparatuses provided in the embodiments of the present invention may be applied to a system in which multiple waveforms are implemented at the same time. The system may be a cellular network, a wireless local area network, a wireless personal area network, an Internet of Things, an Internet of Vehicles, or the like. A transmit side and a receive side may both be a base station, an access point (Access Point, AP for short), or user equipment.

Embodiment 1

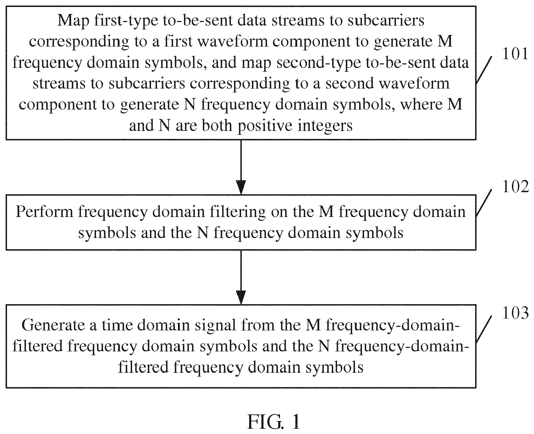

FIG. 1 shows a method for generating a frequency division multi-waveform signal provided in this embodiment of the present invention, including:

101: Map first-type to-be-sent data streams to subcarriers corresponding to a first waveform component to generate M frequency domain symbols, and map second-type to-be-sent data streams to subcarriers corresponding to a second waveform component to generate N frequency domain symbols, where M and N are both positive integers.

Exemplarily, this embodiment may be executed by a transmit side. This embodiment may be applied to a scenario in which frequency domain filtering is performed on frequency domain symbols corresponding to all waveform components of multiple waveform components. It should be noted that in specific implementation, whether the transmit side needs to perform frequency domain filtering on a frequency domain symbol corresponding to one waveform component is related to a type of the waveform component. The first waveform component and the second waveform component may be waveform components of a same type or may be waveform components of different types. For example, the first waveform component is a first FBMC waveform component, and the second waveform component is a second FBMC waveform component. For another example, the first waveform component is an FBMC waveform component, and the second waveform component is a faster-than-Nyquist (Faster-Than-Nyquist, FTN for short) waveform component.

One waveform component corresponds to several subcarriers, and different waveform components correspond to different subcarriers. Generally, there is a same interval between two adjacent subcarriers of subcarriers corresponding to one waveform component. That is, one waveform component corresponds to one subcarrier interval, and subcarrier intervals corresponding to different waveform components may be the same or may be different. Optionally, a subcarrier interval corresponding to the first waveform component is different from a subcarrier interval corresponding to the second waveform. Exemplarily, the subcarriers corresponding to the first waveform component and the subcarriers corresponding to the second waveform component are different basic subcarriers in a same basic subcarrier group. An interval between two adjacent basic subcarriers in the basic subcarrier group (that is, a basic subcarrier interval) is a minimum frequency interval that can be denoted in the frequency domain. Further, to reduce interference between data on subcarriers corresponding to different waveform components, in this example, there is an interval of at least r1+r2-1 basic subcarriers between the subcarriers corresponding to the first waveform component and the subcarriers corresponding to the second waveform component, where r1 is a positive integer indicating that the subcarrier interval corresponding to the first waveform component is equivalent to an interval of r1 basic subcarriers, and r2 is a positive integer indicating that the subcarrier interval corresponding to the second waveform component is equivalent to an interval of r2 basic subcarriers.

Optionally, when the first waveform component is a first FBMC waveform component, a subcarrier interval corresponding to the first FBMC waveform component is an interval of r basic subcarriers, where r is an overlap coefficient of a prototype filter corresponding to the first FBMC waveform component, and r is a positive integer.

A "to-be-sent data stream" includes multiple pieces of to-be-sent data obtained after an operation such as channel coding, modulation, and precoding, and the to-be-sent data refers to data transmitted by the transmit side to a receive side. In specific implementation, the transmit side may continuously generate to-be-sent data and form one to-be-sent data stream by using a fixed quantity of to-be-sent data pieces. This embodiment of the present invention does not impose any limitation on a specific implementation method for generating a to-be-sent data stream by the transmit side or a specific value of the fixed quantity. Specific values of the fixed quantity may be different in different scenarios.

The "first-type to-be-sent data stream" refers to a data stream to be sent on the first waveform component. The "second-type to-be-sent data stream" refers to a data stream to be sent on the second waveform component. In specific implementation, the transmit side may determine, according to a factor such as a channel characteristic of the receive side, which to-be-sent data streams are to be used as first-type to-be-sent data streams, and which to-be-sent data streams are to be used as second-type to-be-sent data streams. In addition, the receive side may select, according to a channel characteristic of the receive side, a waveform component that is relatively suitable for the receive side, and feed back, to the transmit side, information including the waveform component that is relatively suitable for the receive side. The transmit side may use the waveform component to carry a to-be-sent data stream for the receive side, and uses the waveform to communicate with the transmit side. There are a large quantity of receive sides in a system; therefore, compared with the prior art in which all receive sides in a same system use a same waveform, this solution can improve system performance.

For a specific implementation method of step 101, refer to the prior art. In step 101, one to-be-sent data stream corresponds to one frequency domain symbol.

102: Perform frequency domain filtering on the M frequency domain symbols and the N frequency domain symbols.

The transmit side may perform frequency domain filtering on the frequency domain symbols corresponding to different waveform components by using different prototype filters respectively. Optionally, the first waveform component is a first FBMC waveform component, and the second waveform component is a second FBMC waveform component. In this case, step 102 may include: performing frequency domain filtering on the first-type to-be-sent data streams on the M frequency domain symbols by using a prototype filter corresponding to the first FBMC waveform component, and performing frequency domain filtering on the second-type to-be-sent data streams on the N frequency domain symbols by using a prototype filter corresponding to the second FBMC waveform component.

It should be noted that when the system that supports multiple waveform components includes more than two waveform components on which frequency domain filtering needs to be performed, step 102 may include: separately performing frequency domain filtering on each waveform component on which frequency domain filtering needs to be performed.

103: Generate a time domain signal from the M frequency-domain-filtered frequency domain symbols and the N frequency-domain-filtered frequency domain symbols.

Optionally, step 103 may be implemented as follows: generating a time domain signal containing L time domain symbols from the M frequency-domain-filtered frequency domain symbols and the N frequency-domain-filtered frequency domain symbols, where L is less than or equal to a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

Exemplarily, each time domain symbol of the L time domain symbols is a frequency division multi-waveform time domain symbol. In a system that supports only one waveform component, one to-be-sent data stream corresponds to one frequency domain symbol, and one frequency domain symbol corresponds to one time domain symbol of the single waveform component. In a system that supports multiple waveform components, one to-be-sent data stream corresponds to one frequency domain symbol, and all frequency domain symbols that correspond to single-waveform component time domain symbols that have a same start time point correspond to one frequency division multi-waveform time domain symbol.

The "time domain symbol corresponding to one data stream of the first-type to-be-sent data streams" refers to a time domain symbol of the first waveform component, and the "time domain symbol corresponding to one data stream of the second-type to-be-sent data streams" refers to a time domain symbol of the second waveform component.

In this optional manner, L is a positive integer greater than 1, and the generating a time domain signal containing L time domain symbols from the M frequency-domain-filtered frequency domain symbols and the N frequency-domain-filtered frequency domain symbols may include: i) performing an inverse Fourier transform on the M frequency-domain-filtered frequency domain symbols and the N frequency-domain-filtered frequency domain symbols to generate the L time domain symbols; ii) performing a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, where the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that includes the any waveform related to the $a^{th}$ time domain symbol; and iii) performing a superposition operation on the first time domain symbol and the L-1 shifted time domain symbols of the L time domain symbols to generate the time domain signal.

Exemplarily, the "inverse Fourier transform" in this specification includes various inverse Fourier transforms implemented in a mathematical approach or a physical approach as well as their variations. The method may further include: sending shift operation information to the receive side, where the shift operation information is used to enable the receive side to determine a receive time point of the time domain signal.

In this optional manner, when L is 1, the generating a time domain signal containing L time domain symbols from the M frequency-domain-filtered frequency domain symbols and the N frequency-domain-filtered frequency domain symbols includes: performing an inverse Fourier transform on the M frequency-domain-filtered frequency domain symbols and the N frequency-domain-filtered frequency domain symbols to generate one time domain symbol (that is, the time domain signal).

It should be noted that the "FBMC waveform component" in this specification may be implemented by using the following solution: a real number symbol-based offset quadrature amplitude modulation (Offset Quadrature Amplitude Modulation, OQAM) solution, or a complex number symbol-based FMT (Filtered multi-tone) solution. When the FBMC waveform component is implemented by using the OQAM solution, a time domain symbol interval corresponding to the FBMC waveform component is related to a coefficient of a prototype filter corresponding to the FBMC waveform component. When the FBMC waveform component is implemented by using the FMT solution, a time domain symbol interval corresponding to the FBMC waveform component is related to an over-sampling factor.

The method for generating a frequency division multi-waveform signal provided in this embodiment of the present invention enables multiple waveforms to be used in one system. Specifically, one transmit side can be used to implement multiple waveforms at the same time. This is, the method enables a system to support multiple multicarrier technologies.

To clearly describe the technology provided in this embodiment of the present invention, the following describes expression manners of the first-type to-be-sent data stream and the second-type to-be-sent data stream by using an example:

The first-type to-be-sent data stream includes at least one first to-be-sent data stream, and the second-type to-be-sent data stream includes at least one second to-be-sent data stream. Each to-be-sent data stream may be expressed by using a vector. In this case, the first-type to-be-sent data stream may be expressed by a set 1: $[\overrightarrow{a_m^1}, \overrightarrow{a_m^2}, \overrightarrow{a_m^3}, ..., \overrightarrow{a_m^M}]$, where each element in the set 1 denotes one first to-be-sent data stream, and the second-type to-be-sent data stream may be expressed by a set 2: $[\overrightarrow{b_n^1}, \overrightarrow{b_n^2}, \overrightarrow{b_n^3}, ..., \overrightarrow{b_n^N}]$, where each element in the set 2 denotes one second to-be-sent data stream. $\overrightarrow{a_m^1}$ is used as an example to describe the elements in the set 1, and $\overrightarrow{b_n^1}$ is used as an example to describe the elements in the set 2: $\overrightarrow{a_m^1} = [a_1^1, a_2^1, a_3^1, ..., a_m^1]$, where each element in $\overrightarrow{a_m^1}$ denotes one piece of to-be-sent data in $\overrightarrow{a_m^1}$, and $\overrightarrow{b_n^1} = [b_1^1, b_2^1, b_3^1, ..., b_n^1]$, where each element in $\overrightarrow{b_n^1}$ denotes one piece of to-be-sent data in $\overrightarrow{b_n^1}$.

It should be noted that the expression manners of the first-type to-be-sent data stream and the second-type to-be-sent data stream described herein may be used in both the following Embodiment (1) and Embodiment (2).

Embodiment (1)

This embodiment is a specific embodiment of the foregoing Embodiment 1. The foregoing "first waveform component" is a first FBMC waveform component in this embodiment, and the foregoing "second waveform component" is a second FBMC waveform component in this embodiment.

In this embodiment, subcarriers corresponding to the first FBMC waveform component and subcarriers corresponding to the second FBMC waveform component are different basic subcarriers in a same basic subcarrier group. Duration of each time domain symbol of the first FBMC waveform component is equal to duration of each time domain symbol of the second FBMC waveform component, and the duration is denoted by T. The first FBMC waveform component and the second FBMC waveform component are both FBMC waveform components implemented by using the OQAM solution.

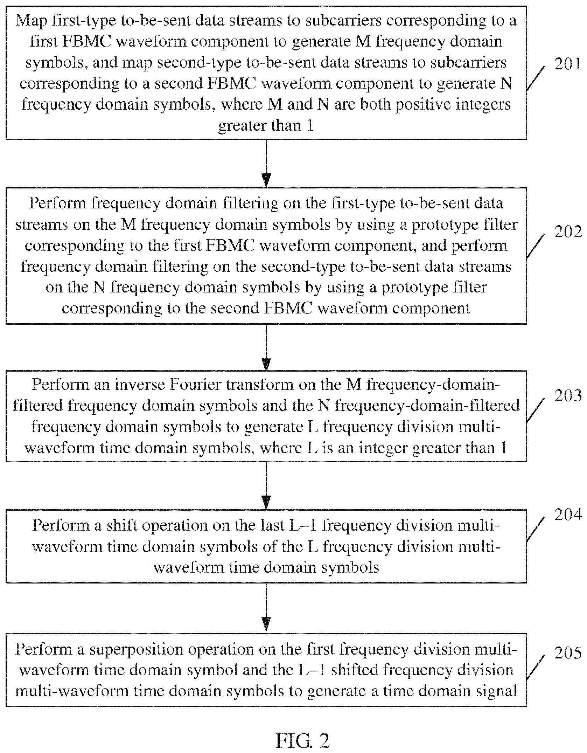

FIG. 2 shows a method for generating a frequency division multi-waveform signal according to this embodiment of the present invention, including:

201: Map first-type to-be-sent data streams to subcarriers corresponding to a first FBMC waveform component to generate M frequency domain symbols, and map second-type to-be-sent data streams to subcarriers corresponding to a second FBMC waveform component to generate N frequency domain symbols, where M and N are both positive integers greater than 1.

Example 1:

It is assumed that an overlap coefficient of a prototype filter corresponding to the first FBMC waveform component is 4, and that an overlap coefficient of a prototype filter corresponding to the second FBMC waveform component is 2. Then, a subcarrier interval corresponding to the first FBMC waveform component is four times a basic subcarrier interval, and a subcarrier interval corresponding to the second FBMC waveform component is two times the basic subcarrier interval. A time domain symbol interval of the first FBMC waveform component is $\frac{T}{8}$, and a time domain symbol interval of the second FBMC waveform component is $\frac{T}{4}$. The time domain symbol interval of the second FBMC waveform component is two times the time domain symbol interval of the first FBMC waveform component. Start time points of time domain symbols of the first FBMC waveform component are $0, \frac{T}{8}, \frac{T}{4}, \frac{3T}{8}, \frac{T}{2}, ..., \frac{kT}{8}, ...,$ and start time points of time domain symbols of the second waveform component are $0, \frac{T}{4}, \frac{T}{2}, ..., \frac{kT}{4}, ...,$ where k is a positive integer.

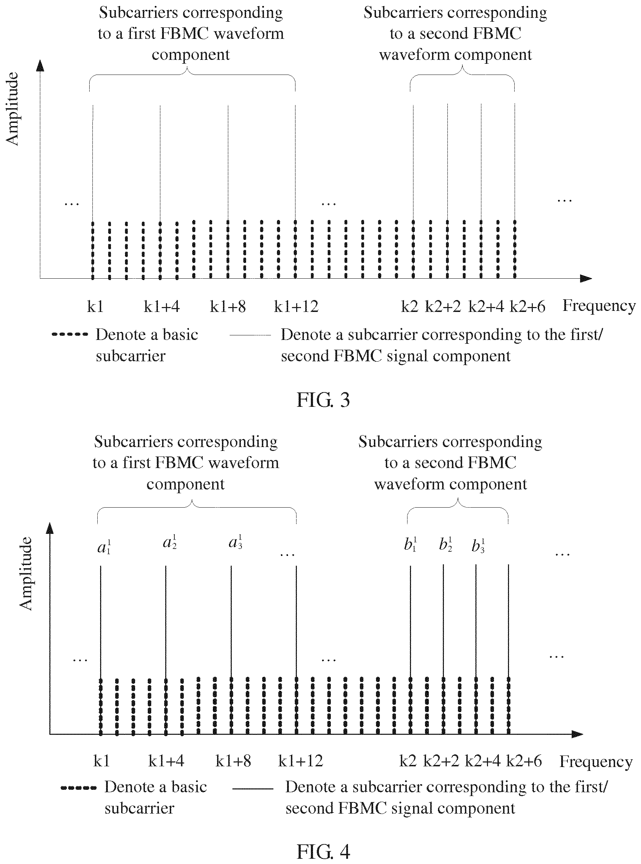

FIG. 3 shows a schematic diagram of a frequency domain relationship between the first FBMC waveform component and the second FBMC waveform component in example 1. Each basic subcarrier in a basic subcarrier group corresponds to a unique number. Numbers of basic subcarriers corresponding to the first FBMC waveform component are k1, k1+4, k1+8, k1+12, ..., and numbers of basic subcarriers corresponding to the second FBMC waveform component are k2, k2+2, k2+4, k2+6, ... FIG. 4 shows a schematic diagram of mapping $\overrightarrow{a_m^1}$ and $\overrightarrow{b_n^1}$ to a basic subcarrier group in example 1.

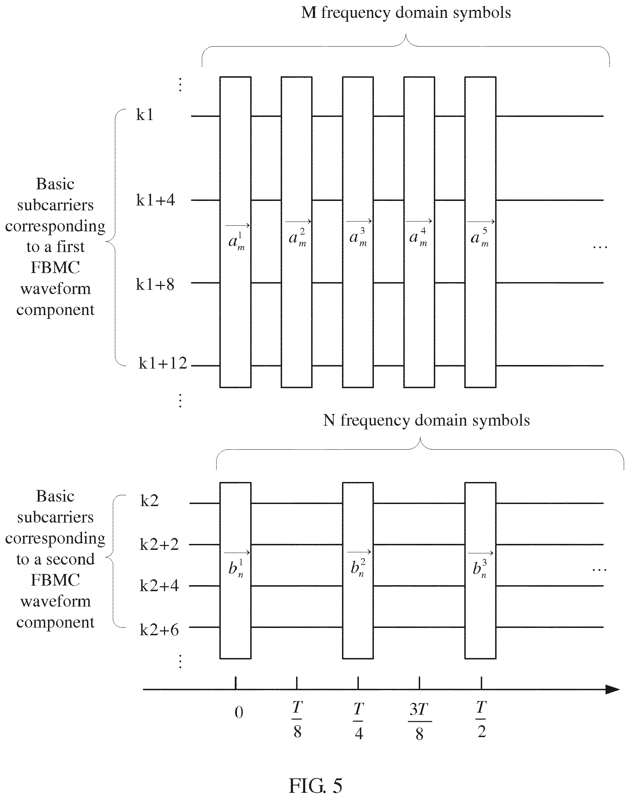

FIG. 5 shows a distribution diagram of M+N frequency domain symbols and single-waveform component time domain symbols corresponding to the M+N frequency domain symbols, obtained based on example 1, where a horizontal axis denotes the start time points of the time domain symbols of single waveform components. It should be noted that start time points of time domain symbols of single waveform components in a system are start time points of frequency division multi-waveform time domain symbols in the system.

202: Perform frequency domain filtering on the first-type to-be-sent data streams on the M frequency domain symbols by using a prototype filter corresponding to the first FBMC waveform component, and perform frequency domain filtering on the second-type to-be-sent data streams on the N frequency domain symbols by using a prototype filter corresponding to the second FBMC waveform component.

Based on example 1, step 202 may be implemented as follows: performing frequency domain filtering on a to-be-sent data stream belonging to the set 1 on the foregoing M frequency domain symbols by using a prototype filter whose overlap coefficient is 4, and performing frequency domain filtering on a to-be-sent data stream belonging to the set 2 on the foregoing N frequency domain symbols by using a prototype filter whose overlap coefficient is 2.

The following describes a frequency domain filtering process by using an example. It is assumed that a frequency domain response of the prototype filter whose overlap coefficient is 4 is $F=[f_{-R}, f_{-R+1}, ..., f_0, ..., f_{R+1}, f_R]$, that is, response duration of the prototype filter is $2R+1$ frequency domain samples, where R is a positive integer. Then, performing frequency domain filtering on to-be-sent data $b_k$ that is in a to-be-sent data stream in the set 1 and that is mapped to the $k^{th}$ basic subcarrier may be represented as: $c_{k+i} = b_k \times f_i$, where $c_{k+i}$ is data obtained by spreading the frequency-domain-filtered $b_k$ to the $(k+i)^{th}$ basic subcarrier, k is an integer, $-R \le i \le R$, and i is an integer. In this case, after a frequency domain filtering operation, the to-be-sent data that is originally mapped to the $k^{th}$ basic subcarrier is spread to $2R+1$ basic subcarriers nearby. It should be noted that after the foregoing operation, a same basic subcarrier may have data spread after multiple pieces of different to-be-sent data undergo frequency domain filtering, and the spread data needs to be added together.

Another relatively common frequency domain filtering method is directly performing a convolution operation on the frequency domain response of the prototype filter and the to-be-sent data stream, which is not described herein.

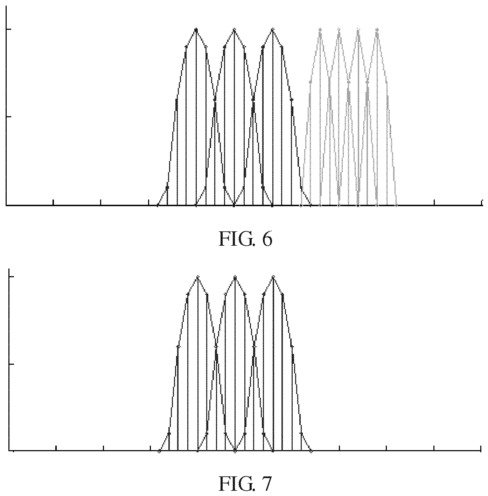

FIG. 6 shows a schematic diagram of frequency domain symbols obtained, based on example 1, after frequency domain filtering is performed on two frequency domain symbols. Single-waveform component time domain symbols corresponding to the two frequency domain symbols have a same start time point, and the start time point may be 0, $\frac{T}{4}$, $\frac{T}{2}$, ... in FIG. 5. FIG. 7 shows a schematic diagram of a frequency domain symbol obtained, based on example 1, after frequency domain filtering is performed on one frequency domain symbol. A start time point of a single-waveform component time domain symbol corresponding to the frequency domain symbol does not correspond to another frequency domain symbol, and the start time point may be $\frac{T}{8}$, $\frac{3T}{8}$, ... in FIG. 5.

203: Perform an inverse Fourier transform on the M frequency-domain-filtered frequency domain symbols and the N frequency-domain-filtered frequency domain symbols to generate L frequency division multi-waveform time domain symbols, where L is an integer greater than 1.

Start time points of the L frequency division multi-waveform time domain symbols in example 1 are respectively 0, $\frac{T}{8}$, $\frac{T}{4}$, ..., and $\frac{(N-1)T}{8}$. Correspondingly, L data streams (referred to as "synthesized data streams" below) corresponding to the L frequency division multi-waveform time domain symbols are respectively $[\overrightarrow{a_m^1}, \overrightarrow{b_n^1}]$, $[\overrightarrow{a_m^2}]$, $[\overrightarrow{a_m^3}, \overrightarrow{b_n^2}]$, $[\overrightarrow{a_m^4}]$, $[\overrightarrow{a_m^5}, \overrightarrow{b_n^3}]$, ... Therefore, it can be known that a synthesized data stream in example 1 may contain one first to-be-sent data stream and one second to-be-sent data stream, or may contain only one first to-be-sent data stream.

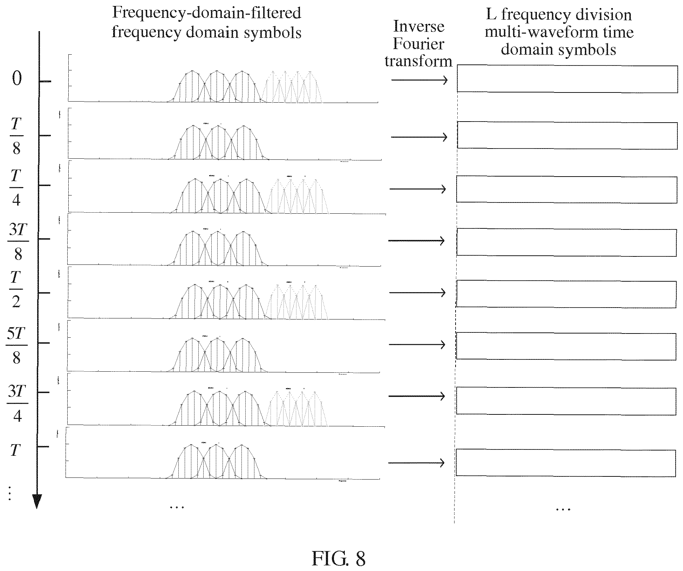

FIG. 8 shows a schematic diagram of the L frequency division multi-waveform time domain symbols generated from the M frequency-domain-filtered frequency domain symbols and the N frequency-domain-filtered frequency domain symbols, obtained based on example 1, where a vertical axis denotes start time points of the L frequency division multi-waveform time domain symbols.

204: Perform a shift operation on the last L-1 frequency division multi-waveform time domain symbols of the L frequency division multi-waveform time domain symbols.

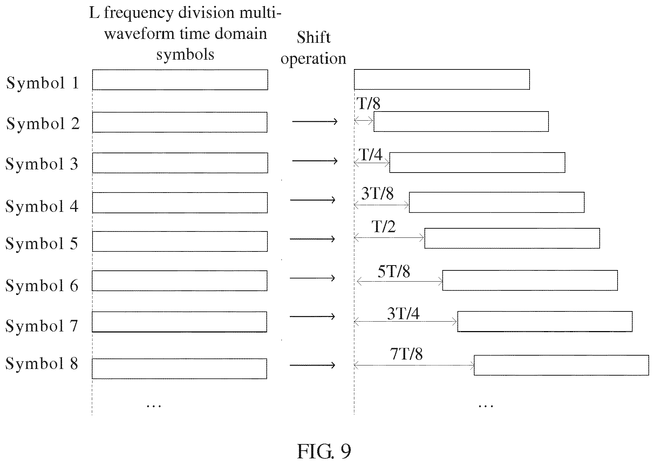

Exemplarily, in example 1, the start time points of the L frequency division multi-waveform time domain symbols are respectively 0, $\frac{T}{8}$, $\frac{T}{4}$, ..., and $\frac{(L-1)T}{8}$, and therefore it can be obtained that a time interval between start time points of two adjacent frequency division multi-waveform time domain symbols is $\frac{T}{8}$. FIG. 9 shows a schematic diagram of the shifted L frequency division multi-waveform time domain symbols obtained based on example 1.

205: Perform a superposition operation on the first frequency division multi-waveform time domain symbol and the L-1 shifted frequency division multi-waveform time domain symbols to generate a time domain signal.

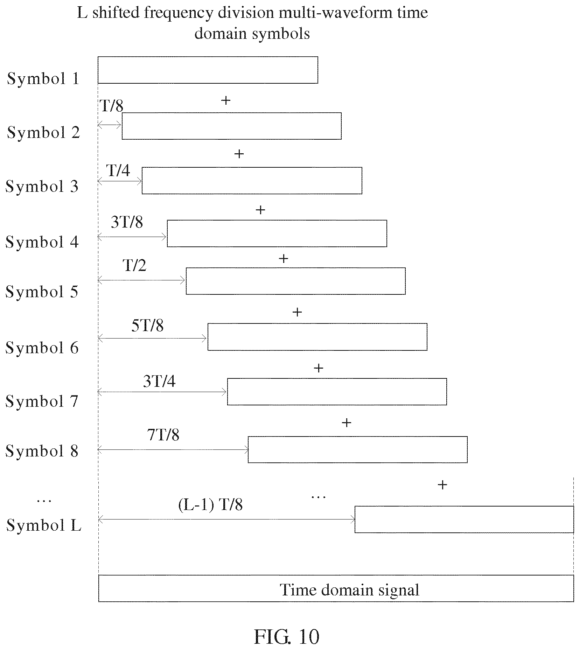

FIG. 10 shows a schematic diagram of the time domain signal obtained based on example 1.

It should be noted that in example 1, the time domain symbol interval of the second FBMC waveform component is an exact integer multiple of the time domain symbol interval of the first FBMC waveform component.

The following describes, by using example 2, a case in which the time domain symbol interval of the second FBMC waveforms component is not an integer multiple of the time domain symbol interval of the first FBMC waveform component.

Example 2:

It is assumed that the overlap coefficient of the prototype filter corresponding to the second FBMC waveform component is 3. Then, the subcarrier interval corresponding to the second FBMC waveform component is three times the basic subcarrier interval, the time domain symbol interval of the second FBMC waveform component is $\frac{T}{6}$, and the numbers of the basic subcarriers corresponding to the second FBMC waveform component are k2, k2+3, k2+6, k2+9, ... In this example, the overlap coefficient of the prototype filter corresponding to the first FBMC waveform component is 4.

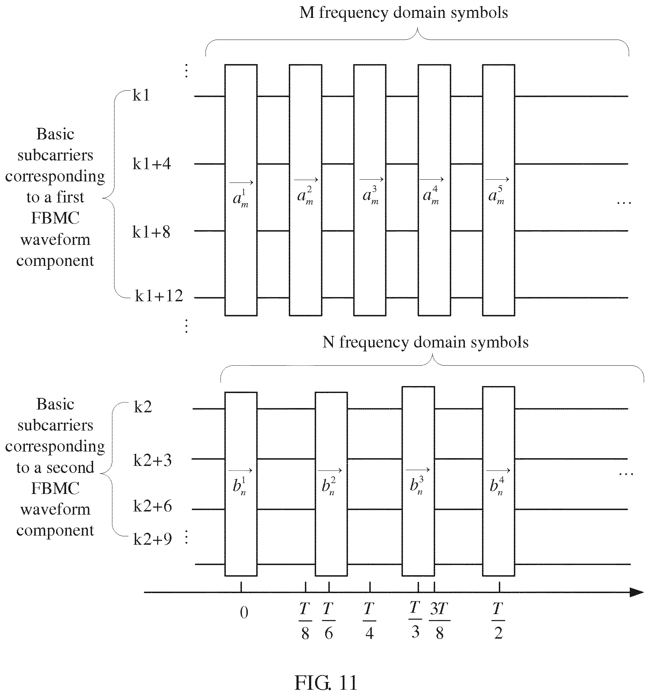

The start time points of the time domain symbols of the second FBMC waveform component are 0, $\frac{T}{6}$, $\frac{T}{3}$, $\frac{T}{2}$, ..., $\frac{kT}{6}$, ... It can be known from the start time points of the time domain symbols of the first FBMC waveform component in example 1 that the start time points of the L frequency division multi-waveform time domain symbols are respectively 0, $\frac{T}{8}$, $\frac{T}{6}$, $\frac{T}{4}$, $\frac{T}{3}$, $\frac{3T}{8}$, $\frac{T}{2}$, ... Correspondingly, L synthesized data streams corresponding to the L frequency division multi-waveform time domain symbols are respectively $[\overrightarrow{a_m^1}, \overrightarrow{b_n^1}]$, $[\overrightarrow{a_m^2}]$, $[\overrightarrow{b_n^2}]$, $[\overrightarrow{a_m^3}]$, $[\overrightarrow{b_n^3}]$, $[\overrightarrow{a_m^4}]$, $[\overrightarrow{a_m^5}, \overrightarrow{b_n^4}]$, ... Therefore, in can be known that a synthesized data stream in example 2 may contain one first to-be-sent data stream and one second to-be-sent data stream, or may contain only one first to-be-sent data stream, or may contain only one second to-be-sent data stream. FIG. 11 shows a distribution diagram of M+N frequency domain symbols and start time points of single-waveform component time domain symbols corresponding to the M+N frequency domain symbols, obtained based on example 2.

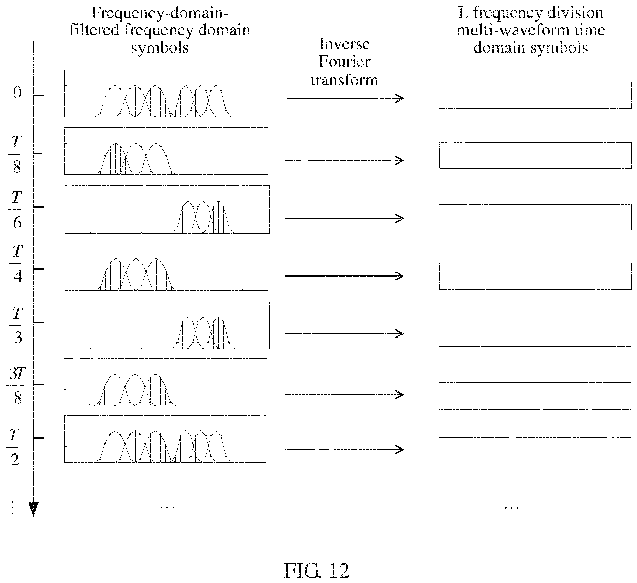

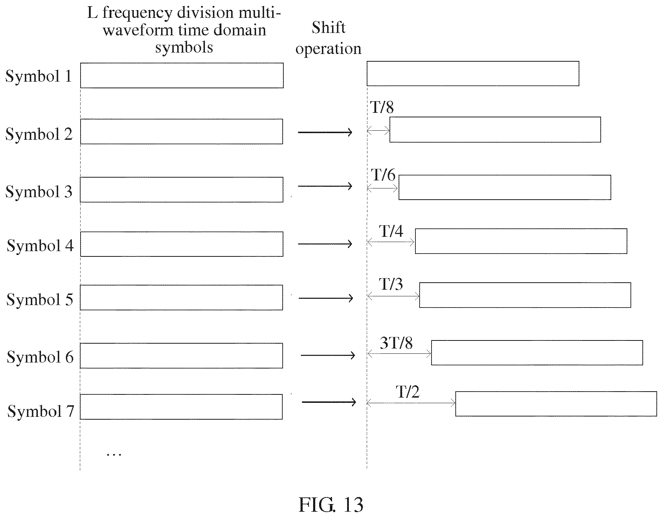

FIG. 12 shows a schematic diagram of the L frequency division multi-waveform time domain symbols obtained based on example 2, where a vertical axis denotes start time points of the L frequency division multi-waveform time domain symbols. FIG. 13 shows a schematic diagram of the L shifted frequency division multi-waveform time domain symbols obtained based on example 2.

The method for generating a frequency division multi-waveform signal provided in this embodiment of the present invention enables two FBMC waveforms to be used in one system. Specifically, one transmit side can be used to implement two FBMC waveforms at the same time. This is, the method enables a system to support multiple multicarrier technologies.

**Embodiment 2**

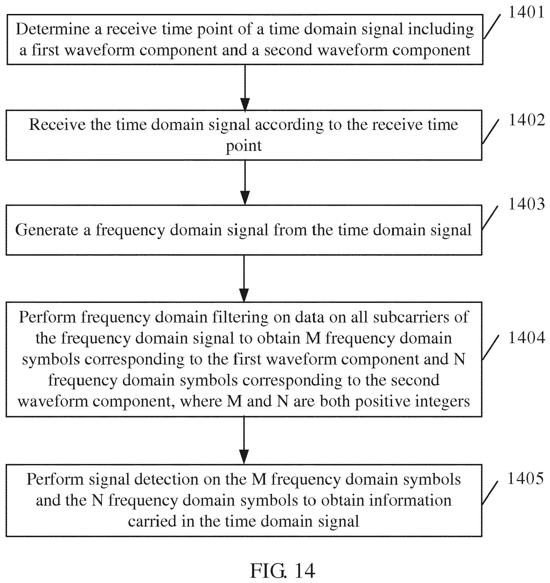

FIG. 14 shows a method for processing a frequency division multi-waveform signal provided in this embodiment of the present invention, including:

1401: Determine a receive time point of a time domain signal including a first waveform component and a second waveform component.

Exemplarily, this embodiment may be executed by a receive side. The method for processing a frequency division multi-waveform signal provided in this embodiment corresponds to the method for generating a frequency division multi-waveform signal provided in Embodiment 1/Embodiment (1). For exposition about related content in this embodiment, refer to the foregoing description.

A time domain signal contains one or more frequency division multi-waveform time domain symbols. One frequency division multi-waveform time domain symbol may relate to a first waveform component, or a second waveform component, or a combination of a first waveform component and a second waveform component. A receive time point of any frequency division multi-waveform time domain symbol is the same as a start time point, determined by a transmit side, of the frequency division multi-waveform time domain symbol. For example, in the foregoing example 1, receive time points of the L frequency division multi-waveform time domain symbols are respectively 0, $\frac{T}{8}$, $\frac{T}{4}$, ..., and $\frac{(L-1)T}{8}$. For another example, in the foregoing example 2, receive time points of the L frequency division multi-waveform time domain symbols are respectively 0, $\frac{T}{8}$, $\frac{T}{6}$, $\frac{T}{4}$, $\frac{T}{3}$, $\frac{3T}{8}$, $\frac{T}{2}$, ... Optionally, all frequency division multi-waveform time domain symbols have same duration, and the duration is denoted by T.

Before step 1401, the method may further include: receiving shift operation information regarding the time domain signal including the first waveform component and the second waveform component, where the shift operation information is sent by the transmit side.

In this case, step 1401 may include: determining the receive time point of the time domain signal according to the shift operation information.

Optionally, the first waveform component is a first FBMC waveform component, and the second waveform component is a second FBMC waveform component.

1402: Receive the time domain signal according to the receive time point.

Exemplarily, step 1402 may include: receiving a segment of time domain signal of duration T at each receive time point. For example, in the foregoing example 2, a segment of time domain signal of the duration T is received at each of the time points 0, $\frac{T}{8}$, $\frac{T}{6}$, $\frac{T}{4}$, $\frac{T}{3}$, $\frac{3T}{8}$, $\frac{T}{2}$, …

1403: Generate a frequency domain signal from the time domain signal.

Specifically, a Fourier transform is performed on the time domain signal to generate the frequency domain signal. The "Fourier transform" in this specification includes various inverse Fourier transforms implemented in a mathematical approach or a physical approach as well as their variations.

1404: Perform frequency domain filtering on data on all subcarriers of the frequency domain signal to obtain M frequency domain symbols corresponding to the first waveform component and N frequency domain symbols corresponding to the second waveform component, where M and N are both positive integers.

Exemplarily, a frequency domain filtering operation performed by the receive side is a filtering process that matches frequency domain filtering performed by the transmit side. Specifically, the example in the foregoing step 202 is used as an example. A frequency domain response of a prototype filter used to perform the frequency domain filtering by the receive side is $F'=[f_{-R}', f_{-R+1}', ..., f_0', ..., f_{R+1}', f_R']$, where $f_i'$ and $f_i$ have a mutually conjugate relationship, $-R \le i \le R$, and i is an integer. Generally, $f_i$ is a real number, and in this case, $f_i'$ is equal to $f_i$. The example in the foregoing step 202 is used as an example. The receive side may obtain, according to the following formula $\hat{b}_k = \sum_{i=-R}^{R}(e_{k+i} \times f_i')$, data $\hat{b}_n^k$ mapped to the $k^{th}$ basic subcarrier, where $e_{k+i}$ indicates data, mapped to the $(k+i)^{th}$ basic subcarrier, of the frequency domain signal in step 1403.

Similarly, the frequency domain filtering operation performed by the receive side may be implemented by performing a convolution operation, exemplified in step 202, on F' and a frequency division multi-waveform frequency domain signal.

1405: Perform signal detection on the M frequency domain symbols and the N frequency domain symbols to obtain information carried in the time domain signal.

Exemplarily, a purpose of the signal detection is to recover the foregoing described to-be-sent data from the frequency-domain-filtered frequency domain signal. For a specific implementation method, refer to the prior art.

When the first waveform component is a first FBMC waveform component, and the second waveform component is a second FBMC waveform component, step 1405 may include: performing frequency domain filtering on data on subcarriers corresponding to the first FBMC waveform component by using a prototype filter corresponding to the first FBMC waveform component to obtain the M frequency domain symbols corresponding to the first FBMC waveform component, and performing frequency domain filtering on data on subcarriers corresponding to the second FBMC waveform component by using a prototype filter corresponding to the second FBMC waveform component to obtain the N frequency domain symbols corresponding to the second FBMC waveform component.

Corresponding to the method for generating a frequency division multi-waveform signal provided in Embodiment 1/Embodiment (1), the method for processing a frequency division multi-waveform signal provided in this embodiment of the present invention enables multiple waveforms to be used in one system. Specifically, one transmit side can be used to implement multiple waveforms at the same time. This is, the method enables a system to support multiple multicarrier technologies.

**Embodiment 3**

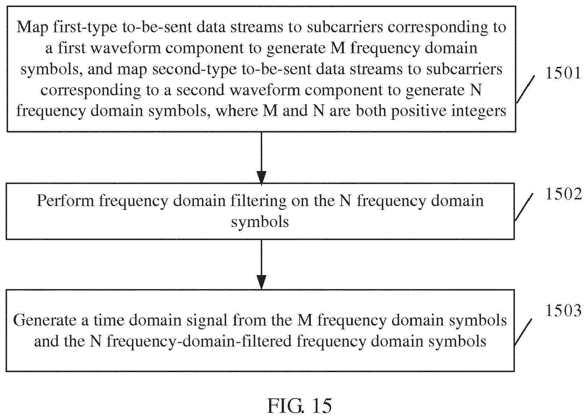

FIG. 15 shows a method for generating a frequency division multi-waveform signal provided in this embodiment of the present invention, including:

1501: Map first-type to-be-sent data streams to subcarriers corresponding to a first waveform component to generate M frequency domain symbols, and map second-type to-be-sent data streams to subcarriers corresponding to a second waveform component to generate N frequency domain symbols, where M and N are both positive integers.

Exemplarily, this embodiment may be executed by a transmit side. This embodiment may be applied to a scenario in which frequency domain filtering is performed on frequency domain symbols corresponding to some waveform components of multiple waveform components. For exposition about related content in this embodiment, refer to Embodiment 1/Embodiment (1).

Optionally, the first waveform component is an OFDM waveform component, and the second waveform component is an FBMC waveform component. Further optionally, a subcarrier interval corresponding to the FBMC waveform component is an integer multiple of a subcarrier interval corresponding to the OFDM waveform component.

Optionally, the subcarriers corresponding to the first waveform component and the subcarriers corresponding to the second waveform component are different basic subcarriers in a same basic subcarrier group. Further, to reduce interference between data on subcarriers corresponding to different waveform components, in this example, there is an interval of at least $r1+r2-1$ basic subcarriers between the subcarriers corresponding to the first waveform component and the subcarriers corresponding to the second waveform component, where $r1$ is a positive integer indicating that a subcarrier interval corresponding to the first waveform component is equivalent to an interval of $r1$ basic subcarriers, and $r2$ is a positive integer indicating that a subcarrier interval corresponding to the second waveform component is equivalent to an interval of $r2$ basic subcarriers.

Optionally, when the first waveform component is an OFDM waveform component, a subcarrier interval corresponding to the OFDM waveform component is an interval of one basic subcarrier; or when the second waveform component is an FBMC waveform component, a subcarrier interval corresponding to the FBMC waveform component is an interval of $r$ basic subcarriers, where $r$ is an overlap coefficient of a prototype filter corresponding to the FBMC waveform component, and $r$ is a positive integer.

1502: Perform frequency domain filtering on the N frequency domain symbols.

Optionally, the second waveform component is an FBMC waveform component. In this case, step 1502 may include: performing frequency domain filtering on the second-type to-be-sent data streams on the N frequency division multi-waveform frequency domain symbols by using a prototype filter corresponding to the FBMC waveform component.

1503: Generate a time domain signal from the M frequency domain symbols and the N frequency-domain-filtered frequency domain symbols.

Optionally, step 1503 may include: generating a time domain signal containing L time domain symbols from the M frequency domain symbols and the N frequency-domain-filtered frequency domain symbols, where L is less than a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

In this optional manner, L is a positive integer greater than 1, and the generating a time domain signal from the M frequency domain symbols and the N frequency-domain-filtered frequency domain symbols may include: i) performing an inverse Fourier transform on the M frequency domain symbols and the N frequency-domain-filtered frequency domain symbols to generate the L time domain symbols; ii) performing a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, where the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that includes the any waveform related to the $a^{th}$ time domain symbol; and iii) performing a superposition operation on the first time domain symbol and the L-1 shifted time domain symbols of the L time domain symbols to generate the time domain signal.

Optionally, the method may further include: sending shift operation information to the receive side, where the shift operation information is used to enable the receive side to determine a receive time point of the time domain signal.

The method for generating a frequency division multi-waveform signal provided in this embodiment of the present invention enables multiple waveforms to be used in one system. Specifically, one transmit side can be used to implement multiple waveforms at the same time. This is, the method enables a system to support multiple multicarrier technologies.

**Embodiment (2)**

This embodiment is a specific embodiment of the foregoing Embodiment 2. The foregoing "first waveform component" is an OFDM waveform component in this embodiment, and the foregoing "second waveform component" is an FBMC waveform component in this embodiment.

In this embodiment, subcarriers corresponding to the FBMC waveform component and subcarriers corresponding to the OFDM waveform component are different basic subcarriers in a same basic subcarrier group. Duration of each time domain symbol of the FBMC waveform component is equal to duration of each time domain symbol of the OFDM waveform component, and the duration is denoted by T. The FBMC waveform component is an FBMC waveform component implemented by using the OQAM solution.

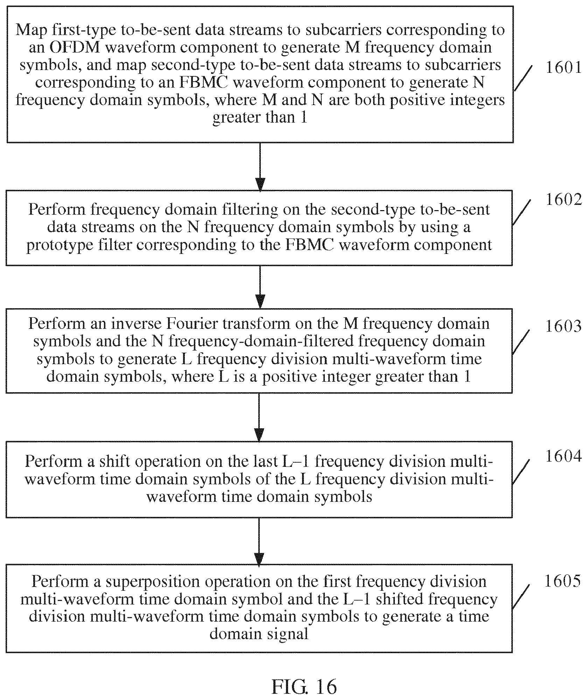

FIG. 16 shows a method for generating a frequency division multi-waveform signal provided in this embodiment of the present invention, including:

1601: Map first-type to-be-sent data streams to subcarriers corresponding to the OFDM waveform component to generate M frequency domain symbols, and map second-type to-be-sent data streams to subcarriers corresponding to the FBMC waveform component to generate N frequency domain symbols, where M and N are both positive integers greater than 1.

Exemplarily, for exposition about related content in this embodiment, refer to the foregoing description. Each frequency domain symbol of the M frequency domain symbols is an OFDM frequency domain symbol, and each frequency domain symbol of the N frequency domain symbols is an FBMC frequency domain symbol.

Example 3:

It is assumed that an overlap coefficient of a prototype filter corresponding to the FBMC waveform component is 4. Then, a subcarrier interval corresponding to the FBMC waveform component is four times a basic subcarrier interval, a time domain symbol interval of the FBMC waveform component is $\dfrac{T}{8}$, and start time points of time domain symbols of the FBMC waveform component are 0, $\dfrac{T}{8}$, $\dfrac{T}{4}$, $\dfrac{3T}{8}$, $\dfrac{T}{2}$, ..., $\dfrac{kT}{8}$, ... A subcarrier interval of the OFDM waveform component is one time the basic subcarrier interval, a time domain symbol interval corresponding to the OFDM waveform component is T, and start time points of time domain symbols of the OFDM waveform component are 0, $\dfrac{T}{2}$, T, $\dfrac{3T}{2}$, ... $\dfrac{kT}{2}$, ...

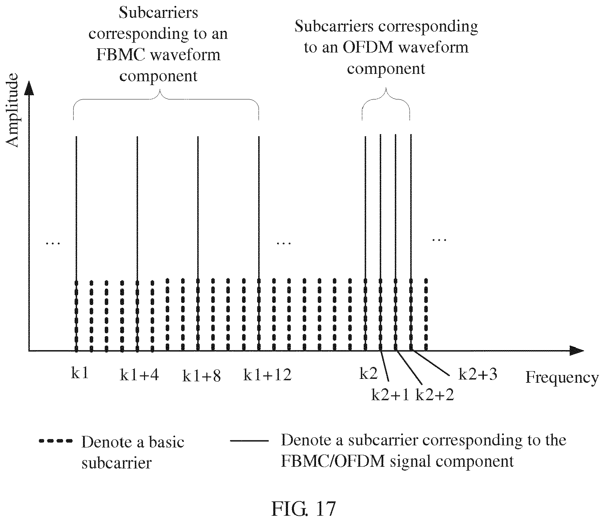

FIG. 17 shows a schematic diagram of a frequency domain relationship between the FBMC waveform component and the OFDM waveform component in example 3. Numbers of basic subcarriers corresponding to the FBMC waveform component are k1, k1+4, k1+8, k1+12, ..., and numbers of basic subcarriers corresponding to the OFDM waveform component are k2, k2+1, k2+2, k2+3, ...

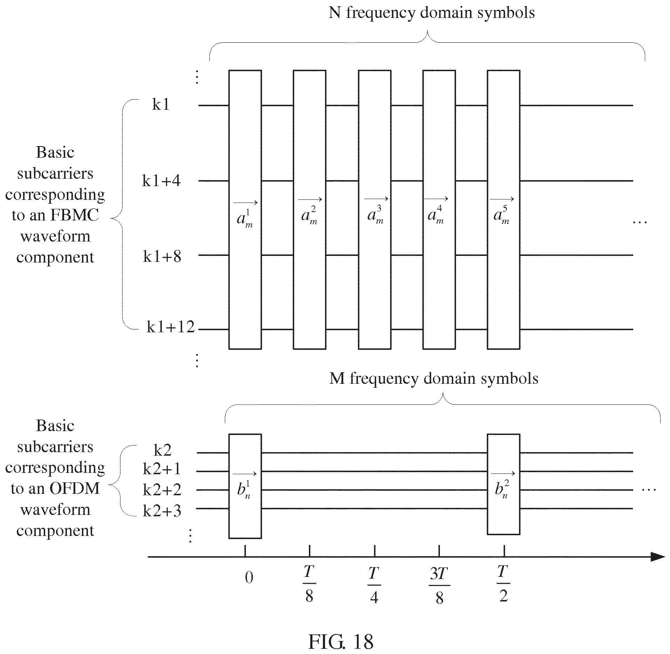

FIG. 18 shows a distribution diagram of M+N frequency domain symbols and start time points of single-waveform component time domain symbols corresponding to the M+N frequency domain symbols, obtained based on example 3, where a horizontal axis denotes the start time points of the time domain symbols of single waveform components. It should be noted that start time points of time domain symbols of single waveform components in a system are start time points of frequency division multi-waveform time domain symbols in the system.

1602: Perform frequency domain filtering on the second-type to-be-sent data streams on the N frequency domain symbols by using a prototype filter corresponding to the FBMC waveform component.

Exemplarily, this embodiment is used to implement an FBMC waveform and an OFDM waveform in one system. Compared with Embodiment (1), this embodiment does not require frequency domain filtering on the to-be-sent data streams on the subcarriers corresponding to the OFDM waveform component.

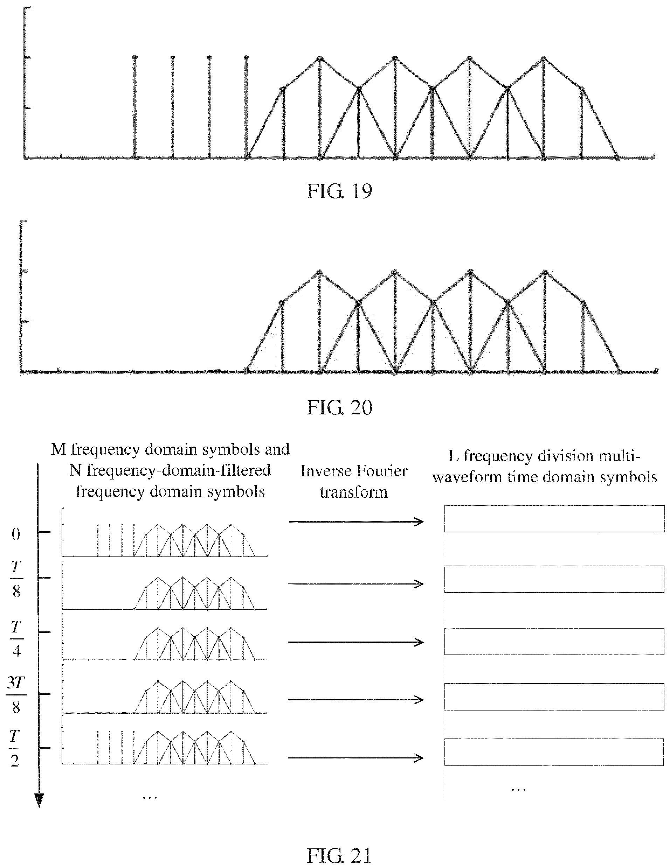

FIG. 19 shows a schematic diagram of one OFDM frequency domain symbol and one frequency-domain-filtered FBMC frequency domain symbol, based on example 3. Single-waveform component time domain symbols corresponding to the two frequency domain symbols have a same start time point, and the start time point may be 0, $\dfrac{T}{2}$, T, ... in FIG. 18. FIG. 20 shows a schematic diagram of a frequency domain signal obtained after frequency domain filtering is performed on one frequency domain symbol of the N frequency domain symbols, based on example 3. A start time point of a single-waveform component time domain symbol corresponding to the frequency domain symbol does not correspond to another frequency domain symbol, and the start time point may be $\dfrac{T}{8}$, $\dfrac{T}{4}$, $\dfrac{3T}{8}$, $\dfrac{5T}{8}$, $\dfrac{3T}{4}$, $\dfrac{7T}{8}$, ... in FIG. 18.

1603: Perform an inverse Fourier transform on the M frequency domain symbols and the N frequency-domain-filtered frequency domain symbols to generate L frequency division multi-waveform time domain symbols, where L is a positive integer greater than 1.

Start time points of the L frequency division multi-waveform time domain symbols, obtained based on example 3, are respectively 0, $\dfrac{T}{8}$, $\dfrac{T}{4}$, ..., and $\dfrac{(N-1)T}{8}$. Correspondingly, L synthesized data streams corresponding to the L frequency division multi-waveform time domain symbols are respectively $[\ \overrightarrow{a_m^1},\ \overrightarrow{b_n^1}\ ]$, $[\ \overrightarrow{a_m^2}\ ]$, $[\ \overrightarrow{a_m^3}\ ]$, $[\ \overrightarrow{a_m^4}\ ]$, $[\ \overrightarrow{a_m^5},\ \overrightarrow{b_n^2}\ ]$, ... Therefore, it can be known that a synthesized data stream in example 3 may contain one first to-be-sent data stream and one second to-be-sent data stream, or may contain only one first to-be-sent data stream. FIG. 21 shows a schematic diagram of the L frequency division multi-waveform time domain symbols obtained based on example 3, where a vertical axis denotes start time points of the L frequency division multi-waveform time domain symbols.

1604: Perform a shift operation on the last L-1 frequency division multi-waveform time domain symbols of the L frequency division multi-waveform time domain symbols.

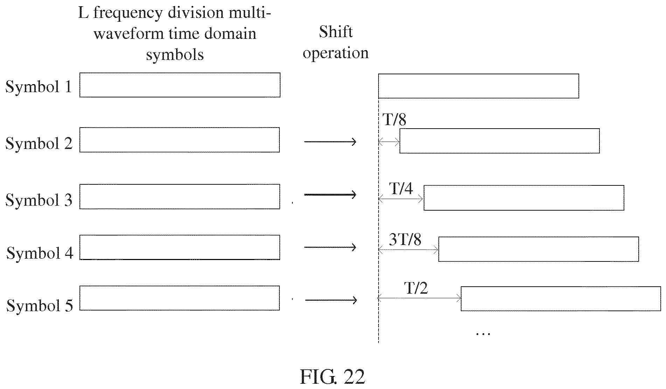

FIG. 22 shows a schematic diagram of the L shifted frequency division multi-waveform time domain symbols obtained based on example 3.

1605: Perform a superposition operation on the first frequency division multi-waveform time domain symbol and the L-1 shifted frequency division multi-waveform time domain symbols to generate a time domain signal.

The method for generating a frequency division multi-waveform signal provided in this embodiment of the present invention enables multiple waveforms to be used in one system. Specifically, one transmit side can be used to implement multiple waveforms at the same time. This is, the method enables a system to support multiple multicarrier technologies.

## Embodiment 4

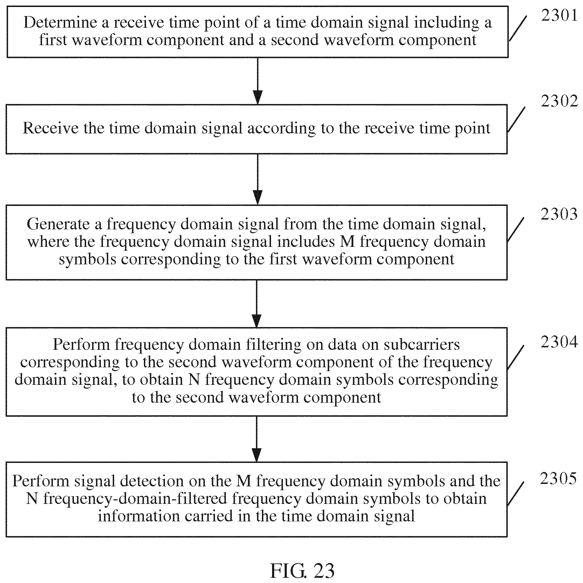

FIG. 23 shows a method for processing a frequency division multi-waveform signal provided in this embodiment of the present invention, including:

> 2301: Determine a receive time point of a time domain signal including a first waveform component and a second waveform component.

Exemplarily, this embodiment may be executed by a receive side. The method for processing a frequency division multi-waveform signal provided in this embodiment corresponds to the method for generating a frequency division multi-waveform signal provided in Embodiment 3/Embodiment (2). For exposition about related content in this embodiment, refer to the foregoing description.

Optionally, before step 2301, the method may further include: receiving shift operation information regarding the time domain signal including the first waveform component and the second waveform component, where the shift operation information is sent by a transmit side. In this case, step 2301 may include: determining the receive time point of the time domain signal according to the shift operation information.

Optionally, the first waveform component is an OFDM waveform component, and the second waveform component is an FBMC waveform component.

2302: Receive the time domain signal according to the receive time point.

2303: Generate a frequency domain signal from the time domain signal, where the frequency domain signal includes M frequency domain symbols corresponding to the first waveform component.

2304: Perform frequency domain filtering on data on subcarriers corresponding to the second waveform component of the frequency domain signal, to obtain N frequency domain symbols corresponding to the second waveform component.

Optionally, when the second waveform component is an FBMC waveform component, step 2301 may include: performing frequency domain filtering on the data on the subcarriers corresponding to the FBMC waveform component by using a prototype filter corresponding to the FBMC waveform component, to obtain N frequency domain symbols corresponding to the FBMC waveform component.

2305: Perform signal detection on the M frequency domain symbols and the N frequency-domain-filtered frequency domain symbols to obtain information carried in the time domain signal.

Corresponding to the method for generating a frequency division multi-waveform signal provided in Embodiment 3/Embodiment (2), the method for processing a frequency division multi-waveform signal provided in this embodiment of the present invention enables multiple waveforms to be used in one system. Specifically, one transmit side can be used to implement multiple waveforms at the same time. This is, the method enables a system to support multiple multicarrier technologies.

## Embodiment 5

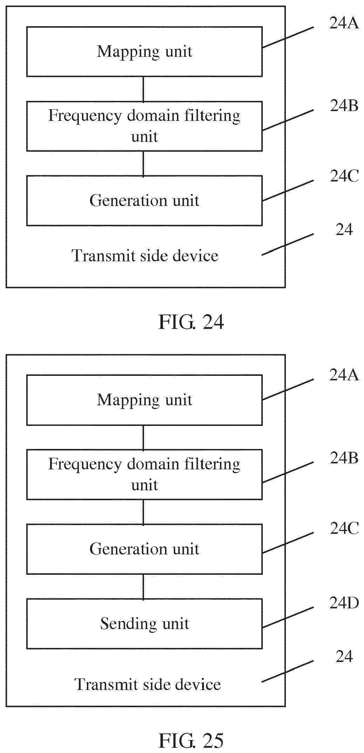

FIG. 24 shows a transmit side device 24 provided in this embodiment of the present invention, configured to execute the method for generating a frequency division multi-waveform signal shown in FIG. 1. The transmit side device 24 includes:

> a mapping unit 24A, configured to map first-type to-be-sent data streams to subcarriers corresponding to a first waveform component to generate M frequency domain symbols, and map second-type to-be-sent data streams to subcarriers corresponding to a second waveform component to generate N frequency domain symbols, where M and N are both positive integers;
> a frequency domain filtering unit 24B, configured to perform frequency domain filtering on the M frequency domain symbols and the N frequency domain symbols; and
> a generation unit 24C, configured to generate a time domain signal from the M frequency-domain-filtered frequency domain symbols and the N frequency-domain-filtered frequency domain symbols.

Optionally, the first waveform component is a first filter bank multicarrier FBMC waveform component, and the second waveform component is a second FBMC waveform component.

Optionally, the generation unit 24C is specifically configured to generate a time domain signal containing L time domain symbols from the M frequency-domain-filtered frequency domain symbols and the N frequency-domain-filtered frequency domain symbols, where L is less than or equal to a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

Optionally, L is a positive integer greater than 1, and the generation unit 24C is specifically configured to:

> perform an inverse Fourier transform on the M frequency-domain-filtered frequency domain symbols and the N frequency-domain-filtered frequency domain symbols to generate the L time domain symbols;
> perform a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, where the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that includes the any waveform related to the $a^{th}$ time domain symbol; and
> perform a superposition operation on the first time domain symbol and the L-1 shifted time domain symbols of the L time domain symbols to generate the time domain signal.

Optionally, a subcarrier interval corresponding to the first waveform component is different from a subcarrier interval corresponding to the second waveform.

Optionally, the subcarriers corresponding to the first waveform component and the subcarriers corresponding to the second waveform component are different basic subcarriers in a same basic subcarrier group.

Optionally, there is an interval of at least r1+r2-1 basic subcarriers between the subcarriers corresponding to the first waveform component and the subcarriers corresponding to the second waveform component, where r1 is a positive integer indicating that the subcarrier interval corresponding to the first waveform component is equivalent to an interval of r1 basic subcarriers, and r2 is a positive integer indicating that the subcarrier interval corresponding to the second waveform component is equivalent to an interval of r2 basic subcarriers.

Optionally, the first waveform component is a first filter bank multicarrier FBMC waveform component, and a subcarrier interval corresponding to the first FBMC waveform component is an interval of r basic subcarriers, where r is an overlap coefficient of a prototype filter corresponding to the first FBMC waveform component, and r is a positive integer.

Optionally, as shown in FIG. 25, the transmit side device 24 may further include:

> a sending unit 24D, configured to send shift operation information to a receive side.

The transmit side device provided in this embodiment of the present invention can use multiple waveforms in one system. Specifically, one transmit side device can be used to implement multiple waveforms at the same time. This is, one system can be enabled to support multiple multicarrier technologies.

**Embodiment 6**

In hardware implementation, the sending unit in the foregoing Embodiment 5 may be a transmitter. The mapping unit, the frequency domain filtering unit, and the generation unit may be embedded into or be independent of a processor of the transmit side device in a hardware form, or may be stored in a memory of the transmit side device in a software form, for calling of the processor to perform the operations corresponding to the foregoing units.

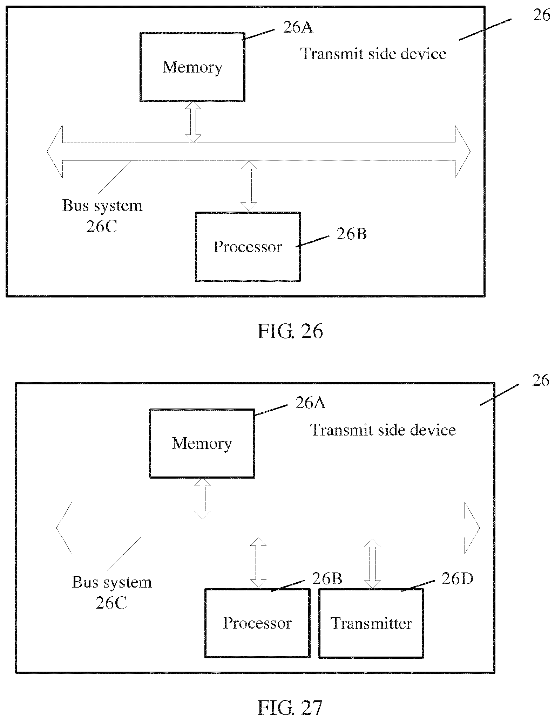

FIG. 26 shows a transmit side device 26 provided in this embodiment of the present invention, configured to execute the method for generating a frequency division multi-waveform signal shown in FIG. 1. The transmit side device 26 includes:

> a memory 26A, a processor 26B, and a bus system 26C.

The memory 26A is configured to store a set of code, and the code is used to control the processor 26B to execute the following actions:

> mapping first-type to-be-sent data streams to subcarriers corresponding to a first waveform component to generate M frequency domain symbols, and mapping second-type to-be-sent data streams to subcarriers corresponding to a second waveform component to generate N frequency domain symbols, where M and N are both positive integers;
> performing frequency domain filtering on the M frequency domain symbols and the N frequency domain symbols; and
> generating a time domain signal from the M frequency-domain-filtered frequency domain symbols and the N frequency-domain-filtered frequency domain symbols.

The bus system 26C is configured to couple all components of the transmit side device 26. In addition to a data bus, the bus system 26C further includes a power bus, a control bus, and a state signal bus. For clear description, all buses in the figure are marked as the bus system 26C.

Exemplarily, the memory 26A may include a read-only memory and a random access memory. A part of the memory 26A may further include a non-volatile random access memory (NVRAM). The processor 26B may be a central processing unit (CPU), a microprocessor, a single-chip microcomputer, or the like. In specific application, the transmit side device 26 may be embedded into or the transmit side device 26 itself may be a base station, an access point, or user equipment on a communications network.

Optionally, the first waveform component is a first filter bank multicarrier FBMC waveform component, and the second waveform component is a second FBMC waveform component.

Optionally, the processor 26B is specifically configured to generate a time domain signal containing L time domain symbols from the M frequency-domain-filtered frequency domain symbols and the N frequency-domain-filtered frequency domain symbols, where L is less than or equal to a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

Optionally, L is a positive integer greater than 1, and the processor 26B is specifically configured to:

perform an inverse Fourier transform on the M frequency-domain-filtered frequency domain symbols and the N frequency-domain-filtered frequency domain symbols to generate the L time domain symbols;

perform a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, where the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that includes the any waveform related to the $a^{th}$ time domain symbol; and

perform a superposition operation on the first time domain symbol and the L-1 shifted time domain symbols of the L time domain symbols to generate the time domain signal.

Optionally, a subcarrier interval corresponding to the first waveform component is different from a subcarrier interval corresponding to the second waveform.

Optionally, the subcarriers corresponding to the first waveform component and the subcarriers corresponding to the second waveform component are different basic subcarriers in a same basic subcarrier group.

Optionally, there is an interval of at least r1+r2-1 basic subcarriers between the subcarriers corresponding to the first waveform component and the subcarriers corresponding to the second waveform component, where r1 is a positive integer indicating that the subcarrier interval corresponding to the first waveform component is equivalent to an interval of r1 basic subcarriers, and r2 is a positive integer indicating that the subcarrier interval corresponding to the second waveform component is equivalent to an interval of r2 basic subcarriers.

Optionally, the first waveform component is a first filter bank multicarrier FBMC waveform component, and a subcarrier interval corresponding to the first FBMC waveform component is an interval of r basic subcarriers, where r is an overlap coefficient of a prototype filter corresponding to the first FBMC waveform component, and r is a positive integer.

Optionally, as shown in FIG. 27, the transmit side device 26 may further include:

a transmitter 26D, configured to send shift operation information to a receive side.

The transmit side device provided in this embodiment of the present invention can use multiple waveforms in one system. Specifically, one transmit side device can be used to implement multiple waveforms at the same time. This is, one system can be enabled to support multiple multicarrier technologies.

**Embodiment 7**

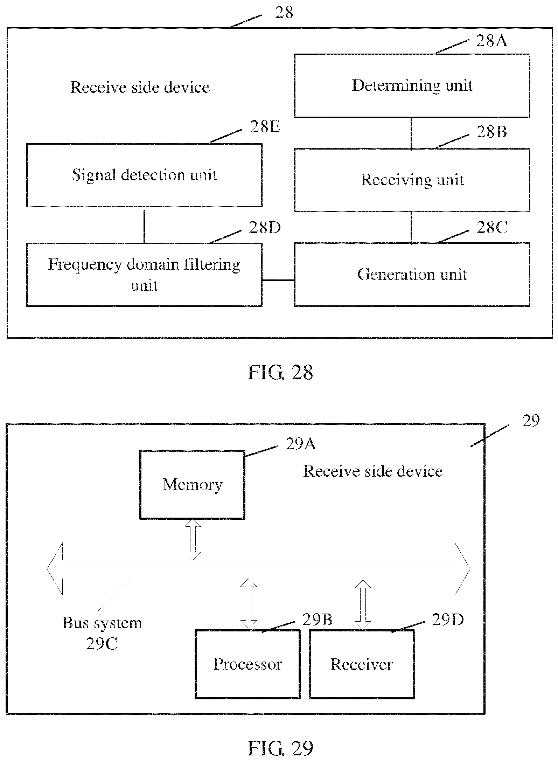

FIG. 28 shows a receive side device 28 provided in this embodiment of the present invention, configured to execute the method for processing a frequency division multi-waveform signal shown in FIG. 14. The receive side device 28 includes:

a determining unit 28A, configured to determine a receive time point of a time domain signal including a first waveform component and a second waveform component;

a receiving unit 28B, configured to receive the time domain signal according to the receive time point;

a generation unit 28C, configured to generate a frequency domain signal from the time domain signal;

a frequency domain filtering unit 28D, configured to perform frequency domain filtering on data on all subcarriers of the frequency domain signal to obtain M frequency domain symbols corresponding to the first waveform component and N frequency domain symbols corresponding to the second waveform component, where M and N are both positive integers; and

a signal detection unit 28E, configured to perform signal detection on the M frequency domain symbols and the N frequency domain symbols to obtain information carried in the time domain signal.

Optionally, the first waveform component is a first filter bank multicarrier FBMC waveform component, and the second waveform component is a second FBMC waveform component.

Optionally, the frequency domain filtering unit 28D is specifically configured to:

perform frequency domain filtering on data on subcarriers corresponding to the first FBMC waveform component by using a prototype filter corresponding to the first FBMC waveform component, to obtain the M frequency domain symbols corresponding to the first FBMC waveform component; and

perform frequency domain filtering on data on subcarriers corresponding to the second FBMC waveform component by using a prototype filter corresponding to the second FBMC waveform component, to obtain the N frequency domain symbols corresponding to the second FBMC waveform component.

Optionally, the receiving unit 28B is further configured to receive shift operation information regarding the time domain signal including the first waveform component and the second waveform component, where the shift operation information is sent by a transmit side.

The determining unit 28A is specifically configured to determine the receive time point of the time domain signal according to the shift operation information.

Corresponding to the transmit side device provided in the foregoing Embodiment 5/Embodiment 6, the receive side device provided in this embodiment of the present invention can use multiple waveforms in one system. Specifically, one transmit side device can be used to implement multiple waveforms at the same time. This is, one system can be enabled to support multiple multicarrier technologies.

**Embodiment 8**

In hardware implementation, the receiving unit in the foregoing Embodiment 7 may be a receiver. The determining unit, the generation unit, the frequency domain filtering unit, and the signal detection unit may be embedded into or be independent of a processor of the receive side device in a hardware form, or may be stored in a memory of the receive side device in a software form, for calling of the processor to perform the operations corresponding to the foregoing units.

FIG. 29 shows a receive side device 29 provided in this embodiment of the present invention, configured to execute the method for processing a frequency division multi-waveform signal shown in FIG. 14. The receive side device 29 includes:

a memory 29A, a processor 29B, a bus system 29C, and a receiver 29D.

The memory 29A is configured to store a set of code. The code is used to control the processor 29B to determine a receive time point of a time domain signal including a first waveform component and a second waveform component.

The receiver 29D is configured to receive the time domain signal according to the receive time point.

The code is used to control the processor 29B to execute the following actions:

generating a frequency domain signal from the time domain signal;

performing frequency domain filtering on data on all subcarriers of the frequency domain signal to obtain M frequency domain symbols corresponding to the first waveform component and N frequency domain symbols corresponding to the second waveform component, where M and N are both positive integers; and

performing signal detection on the M frequency domain symbols and the N frequency domain symbols to obtain information carried in the time domain signal.

It should be noted that, for related exposition about the bus system 29C and the memory 29A, refer to the foregoing Embodiment 6.

Optionally, the first waveform component is a first filter bank multicarrier FBMC waveform component, and the second waveform component is a second FBMC waveform component.

Optionally, the processor 29B is specifically configured to:

perform frequency domain filtering on data on subcarriers corresponding to the first FBMC waveform component by using a prototype filter corresponding to the first FBMC waveform component, to obtain the M frequency domain symbols corresponding to the first FBMC waveform component; and

perform frequency domain filtering on data on subcarriers corresponding to the second FBMC waveform component by using a prototype filter corresponding to the second FBMC waveform component, to obtain the N frequency domain symbols corresponding to the second FBMC waveform component.

Optionally, the receiver 29D is further configured to receive shift operation information regarding the time domain signal including the first waveform component and the second waveform component, where the shift operation information is sent by a transmit side. The processor 29B is specifically configured to determine the receive time point of the time domain signal according to the shift operation information.

Corresponding to the transmit side device provided in the foregoing Embodiment 5/Embodiment 6, the receive side device provided in this embodiment of the present invention can use multiple waveforms in one system. Specifically, one transmit side device can be used to implement multiple waveforms at the same time. This is, one system can be enabled to support multiple multi-carrier technologies.

**Embodiment 9**

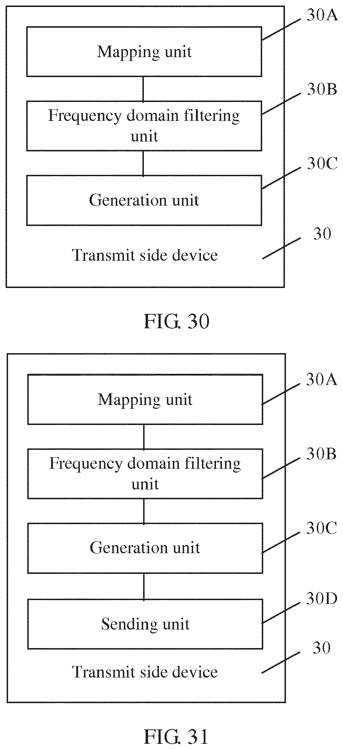

FIG. 30 shows a transmit side device 30 provided in this embodiment of the present invention, configured to execute the method for generating a frequency division multi-waveform signal shown in FIG. 16. The transmit side device 23 includes:

a mapping unit 30A, configured to map first-type to-be-sent data streams to subcarriers corresponding to a first waveform component to generate M frequency domain symbols, and map second-type to-be-sent data streams to subcarriers corresponding to a second waveform component to generate N frequency domain symbols, where M and N are both positive integers;

a frequency domain filtering unit 30B, configured to perform frequency domain filtering on the N frequency domain symbols; and

a generation unit 30C, configured to generate a time domain signal from the M frequency domain symbols and the N frequency-domain-filtered frequency domain symbols.

Optionally, the first waveform component is an orthogonal frequency division multiplexing OFDM waveform component and the second waveform component is a filter bank multicarrier FBMC waveform component.

Optionally, a subcarrier interval corresponding to the FBMC waveform component is an integer multiple of a subcarrier interval corresponding to the OFDM waveform component.

Optionally, the generation unit 30C is specifically configured to generate a time domain signal containing L time domain symbols from the M frequency domain symbols and the N frequency-domain-filtered frequency domain symbols, where L is less than a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

Optionally, L is a positive integer greater than 1, and the generation unit 30C is specifically configured to:

perform an inverse Fourier transform on the M frequency domain symbols and the N frequency-domain-filtered frequency domain symbols to generate the L time domain symbols;

perform a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, where the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that includes the any waveform related to the $a^{th}$ time domain symbol; and

perform a superposition operation on the first time domain symbol and the L-1 shifted time domain symbols of the L time domain symbols to generate the time domain signal.

Optionally, the subcarriers corresponding to the first waveform component and the subcarriers corresponding to the second waveform component are different basic subcarriers in a same basic subcarrier group.

Optionally, there is an interval of at least r1+r2-1 basic subcarriers between the subcarriers corresponding to the first waveform component and the subcarriers corresponding to the second waveform component, where r1 is a positive integer indicating that a subcarrier interval corresponding to the first waveform component is equivalent to an interval of r1 basic subcarriers, and r2 is a positive integer indicating that a subcarrier interval corresponding to the second waveform component is equivalent to an interval of r2 basic subcarriers.

Optionally, the first waveform component is an orthogonal frequency division multiplexing OFDM waveform component, and a subcarrier interval corresponding to the OFDM waveform component is an interval of one basic subcarrier; or the second waveform component is a filter bank multicarrier FBMC waveform component, and a subcarrier interval corresponding to the FBMC waveform component is an interval of r basic subcarriers, where r is an overlap coefficient of a prototype filter corresponding to the FBMC waveform component, and r is a positive integer.

Optionally, as shown in FIG. 31, the transmit side device 30 may further include:

a sending unit 30D, configured to send shift operation information to a receive side.

The transmit side device provided in this embodiment of the present invention can use multiple waveforms in one system. Specifically, one transmit side device can be used to implement multiple waveforms at the same time. This is, one system can be enabled to support multiple multicarrier technologies.

**Embodiment 10**

In hardware implementation, the sending unit in the foregoing Embodiment 9 may be a transmitter. The mapping unit, the frequency domain filtering unit, and the generation unit may be embedded into or be independent of a processor of the transmit side device in a hardware form, or may be stored in a memory of the transmit side device in a software form, for calling of the processor to perform the operations corresponding to the foregoing units.

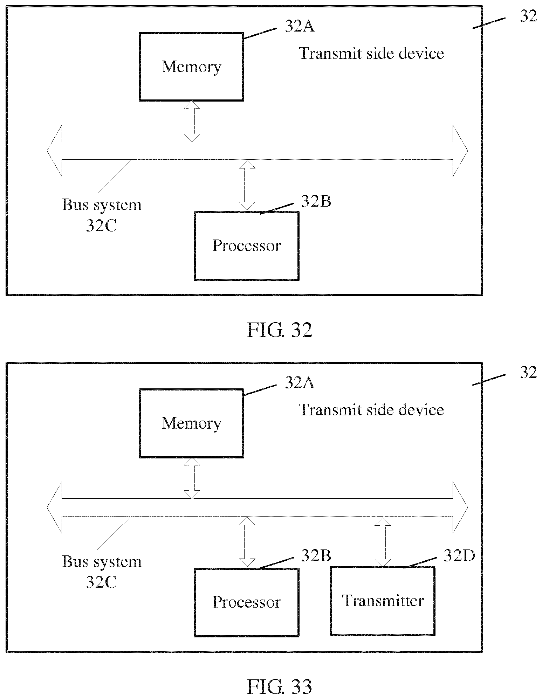

FIG. 32 shows a transmit side device 32 provided in this embodiment of the present invention, configured to execute the method for generating a frequency division multi-waveform signal shown in FIG. 16. The transmit side device 32 includes:

a memory 32A, a processor 32B, and a bus system 32C.

The memory 32A is configured to store a set of code, and the code is used to control the processor 32B to execute the following actions:

mapping first-type to-be-sent data streams to subcarriers corresponding to a first waveform component to generate M frequency domain symbols, and mapping second-type to-be-sent data streams to subcarriers corresponding to a second waveform component to generate N frequency domain symbols, where M and N are both positive integers;

performing frequency domain filtering on the N frequency domain symbols; and

generating a time domain signal from the M frequency domain symbols and the N frequency-domain-filtered frequency domain symbols.

It should be noted that for related exposition about the bus system 32C and the memory 32A, refer to the foregoing Embodiment 6.

Optionally, the first waveform component is an orthogonal frequency division multiplexing OFDM waveform component and the second waveform component is a filter bank multicarrier FBMC waveform component.

Optionally, a subcarrier interval corresponding to the FBMC waveform component is an integer multiple of a subcarrier interval corresponding to the OFDM waveform component.

Optionally, the processor 32B is specifically configured to generate a time domain signal containing L time domain symbols from the M frequency domain symbols and the N frequency-domain-filtered frequency domain symbols, where L is less than a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

Optionally, the processor 32B is specifically configured to:

perform an inverse Fourier transform on the M frequency domain symbols and the N frequency-domain-filtered frequency domain symbols to generate the L time domain symbols;

perform a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, where the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that includes the any waveform related to the $a^{th}$ time domain symbol; and

perform a superposition operation on the first time domain symbol and the L-1 shifted time domain symbols of the L time domain symbols to generate the time domain signal.

Optionally, the subcarriers corresponding to the first waveform component and the subcarriers corresponding to the second waveform component are different basic subcarriers in a same basic subcarrier group.

Optionally, there is an interval of at least r1+r2-1 basic subcarriers between the subcarriers corresponding to the first waveform component and the subcarriers corresponding to the second waveform component, where r1 is a positive integer indicating that a subcarrier interval corresponding to the first waveform component is equivalent to an interval of r1 basic subcarriers, and r2 is a positive integer indicating that a subcarrier interval corresponding to the second waveform component is equivalent to an interval of r2 basic subcarriers.

Optionally, the first waveform component is an orthogonal frequency division multiplexing OFDM waveform component, and a subcarrier interval corresponding to the OFDM waveform component is an interval of one basic subcarrier; or the second waveform component is a filter bank multicarrier FBMC waveform component, and a subcarrier interval corresponding to the FBMC waveform component is an interval of r basic subcarriers, where r is an overlap coefficient of a prototype filter corresponding to the FBMC waveform component, and r is a positive integer.

Optionally, as shown in FIG. 33, the transmit side device 32 may further include:

a transmitter 32D, configured to send shift operation information to a receive side.

The transmit side device provided in this embodiment of the present invention can use multiple waveforms in one system. Specifically, one transmit side device can be used to implement multiple waveforms at the same time. This is, one system can be enabled to support multiple multicarrier technologies.

**Embodiment 11**

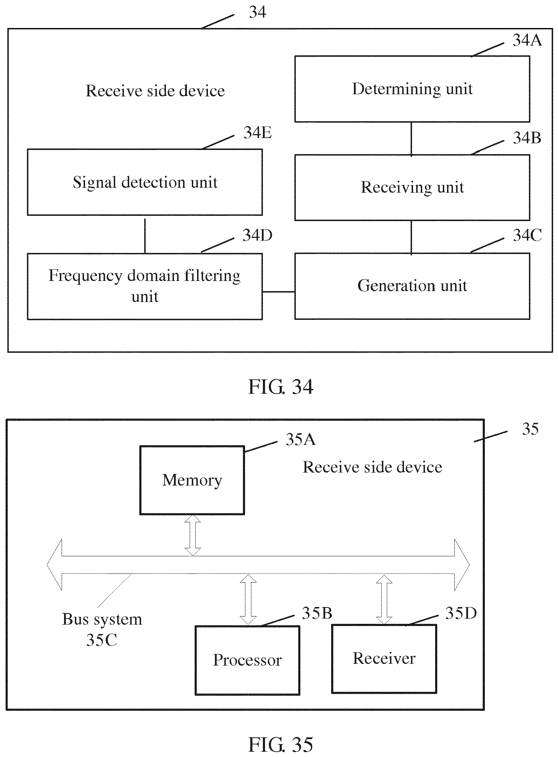

FIG. 34 shows a receive side device 34 provided in this embodiment of the present invention, configured to execute the method for processing a frequency division multi-waveform signal shown in FIG. 23. The receive side device 34 includes:

a determining unit 34A, configured to determine a receive time point of a time domain signal including a first waveform component and a second waveform component;
a receiving unit 34B, configured to receive the time domain signal according to the receive time point;
a generation unit 34C, configured to generate a frequency domain signal from the time domain signal, where the frequency domain signal includes M frequency domain symbols corresponding to the first waveform component;
a frequency domain filtering unit 34D, configured to perform frequency domain filtering on data on subcarriers corresponding to the second waveform component of the frequency domain signal, to obtain N frequency domain symbols corresponding to the second waveform component; and
a signal detection unit 34E, configured to perform signal detection on the M frequency domain symbols and the N frequency-domain-filtered frequency domain symbols to obtain information carried in the time domain signal.

Optionally, the first waveform component is an orthogonal frequency division multiplexing OFDM waveform component and the second waveform component is a filter bank multicarrier FBMC waveform component.
Optionally, the receiving unit 34B is further configured to receive shift operation information regarding the time domain signal including the first waveform component and the second waveform component, where the shift operation information is sent by a transmit side.
The determining unit 34A is specifically configured to determine the receive time point of the time domain signal according to the shift operation information.
Corresponding to the transmit side device provided in the foregoing Embodiment 9/Embodiment 10, the receive side device provided in this embodiment of the present invention can use multiple waveforms in one system. Specifically, one transmit side device can be used to implement multiple waveforms at the same time. This is, one system can be enabled to support multiple multicarrier technologies.

**Embodiment 12**

In hardware implementation, the receiving unit in the foregoing Embodiment 11 may be a receiver. The determining unit, the generation unit, the frequency domain filtering unit, and the signal detection unit may be embedded into or be independent of a processor of the transmit side device in a hardware form, or may be stored in a memory of the transmit side device in a software form, for calling of the processor to perform the operations corresponding to the foregoing units.
FIG. 35 shows a receive side device 35 provided in this embodiment of the present invention, configured to execute the method for processing a frequency division multi-waveform signal shown in FIG. 23. The receive side device 35 includes:

a memory 35A, a processor 35B, a bus system 35C, and a receiver 35D.

The memory 35A is configured to store a set of code. The code is used to control the processor 35B to determine a receive time point of a time domain signal including a first waveform component and a second waveform component.
The receiver 35D is configured to receive the time domain signal according to the receive time point.
The code is further used to control the processor 35B to execute the following actions:

generating a frequency domain signal from the time domain signal, where the frequency domain signal includes M frequency domain symbols corresponding to the first waveform component;
performing frequency domain filtering on data on subcarriers corresponding to the second waveform component of the frequency domain signal, to obtain N frequency domain symbols corresponding to the second waveform component; and
performing signal detection on the M frequency domain symbols and the N frequency-domain-filtered frequency domain symbols to obtain information carried in the time domain signal.

It should be noted that for related exposition about the bus system 35C and the memory 35A, refer to the foregoing Embodiment 6.
Optionally, the first waveform component is an orthogonal frequency division multiplexing OFDM waveform component and the second waveform component is a filter bank multicarrier FBMC waveform component.
Optionally, the receiver 35D is further configured to receive shift operation information regarding the time domain signal including the first waveform component and the second waveform component, where the shift operation information is sent by a transmit side. The processor 35B is specifically configured to determine the receive time point of the time domain signal according to the shift operation information.

Corresponding to the transmit side device provided in the foregoing Embodiment 9/Embodiment 10, the receive side device provided in this embodiment of the present invention can use multiple waveforms in one system. Specifically, one transmit side device can be used to implement multiple waveforms at the same time. This is, one system can be enabled to support multiple multicarrier technologies.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A method for generating a frequency division multi-waveform signal, comprising:

   mapping first-type to-be-sent data streams to subcarriers corresponding to a first waveform component to generate M frequency domain symbols, and mapping second-type to-be-sent data streams to subcarriers corresponding to a second waveform component to generate N frequency domain symbols, wherein M and N are both positive integers;
   performing frequency domain filtering on the M frequency domain symbols and the N frequency domain symbols; and
   generating a time domain signal from the M frequency-domain-filtered frequency domain symbols and the N frequency-domain-filtered frequency domain symbols.

2. The method according to claim 1, wherein the first waveform component is a first filter bank multicarrier FBMC waveform component and the second waveform component is a second FBMC waveform component.

3. The method according to claim 1 or 2, wherein the generating a time domain signal from the M frequency-domain-filtered frequency domain symbols and the N frequency-domain-filtered frequency domain symbols comprises:

   generating a time domain signal containing L time domain symbols from the M frequency-domain-filtered frequency domain symbols and the N frequency-domain-filtered frequency domain symbols, wherein L is less than or equal to a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

4. The method according to claim 3, wherein L is a positive integer greater than 1, and the generating a time domain signal containing L time domain symbols from the M frequency-domain-filtered frequency domain symbols and the N frequency-domain-filtered frequency domain symbols comprises:

performing an inverse Fourier transform on the M frequency-domain-filtered frequency domain symbols and the N frequency-domain-filtered frequency domain symbols to generate the L time domain symbols;
performing a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, wherein the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that comprises the any waveform related to the $a^{th}$ time domain symbol; and
performing a superposition operation on the first time domain symbol and the L-1 shifted time domain symbols of the L time domain symbols to generate the time domain signal.

5. The method according to any one of claims 1 to 4, wherein a subcarrier interval corresponding to the first waveform component is different from a subcarrier interval corresponding to the second waveform.

6. The method according to any one of claims 1 to 5, wherein the subcarriers corresponding to the first waveform component and the subcarriers corresponding to the second waveform component are different basic subcarriers in a same basic subcarrier group.

7. The method according to claim 6, wherein there is an interval of at least r1+r2-1 basic subcarriers between the subcarriers corresponding to the first waveform component and the subcarriers corresponding to the second waveform component, wherein r1 is a positive integer indicating that the subcarrier interval corresponding to the first waveform component is equivalent to an interval of r1 basic subcarriers, and r2 is a positive integer indicating that the subcarrier interval corresponding to the second waveform component is equivalent to an interval of r2 basic subcarriers.

8. The method according to claim 6 or 7, wherein the first waveform component is a first filter bank multicarrier FBMC waveform component, and a subcarrier interval corresponding to the first FBMC waveform component is an interval of r basic subcarriers, wherein r is an overlap coefficient of a prototype filter corresponding to the first FBMC waveform component, and r is a positive integer.

9. The method according to claim 4, wherein the method further comprises:

sending shift operation information to a receive side.

10. A method for processing a frequency division multiwaveform signal, comprising:

determining a receive time point of a time domain signal comprising a first waveform component and a second waveform component;
receiving the time domain signal according to the receive time point;
generating a frequency domain signal from the time domain signal;
performing frequency domain filtering on data on all subcarriers of the frequency domain signal to obtain M frequency domain symbols corresponding to the first waveform component and N frequency domain symbols corresponding to the second waveform component, wherein M and N are both positive integers; and
performing signal detection on the M frequency domain symbols and the N frequency domain symbols to obtain information carried in the time domain signal.

11. The method according to claim 10, wherein the first waveform component is a first filter bank multicarrier FBMC waveform component and the second waveform component is a second FBMC waveform component.

12. The method according to claim 11, wherein the performing frequency domain filtering on data on all subcarriers of the frequency domain signal to obtain M frequency domain symbols corresponding to the first waveform component and N frequency domain symbols corresponding to the second waveform component comprises:

performing frequency domain filtering on data on subcarriers corresponding to the first FBMC waveform component by using a prototype filter corresponding to the first FBMC waveform component, to obtain the M frequency domain symbols corresponding to the first FBMC waveform component; and

performing frequency domain filtering on data on subcarriers corresponding to the second FBMC waveform component by using a prototype filter corresponding to the second FBMC waveform component, to obtain the N frequency domain symbols corresponding to the second FBMC waveform component.

13. The method according to any one of claims 10 to 12, wherein before the determining a receive time point of a time domain signal comprising a first waveform component and a second waveform component, the method further comprises:

receiving shift operation information regarding the time domain signal comprising the first waveform component and the second waveform component, wherein the shift operation information is sent by a transmit side; and

the determining a receive time point of a time domain signal comprising a first waveform component and a second waveform component comprises:

determining the receive time point of the time domain signal according to the shift operation information.

14. A method for generating a frequency division multiwaveform signal, comprising:

Mapping first-type to-be-sent data streams to subcarriers corresponding to a first waveform component to generate M frequency domain symbols, and mapping second-type to-be-sent data streams to subcarriers corresponding to a second waveform component to generate N frequency domain symbols, wherein M and N are both positive integers;

Performing frequency domain filtering on the N frequency domain symbols; and

Generating a time domain signal from the M frequency domain symbols and the N frequency-domain-filtered frequency domain symbols.

15. The method according to claim 14, wherein the first waveform component is an orthogonal frequency division multiplexing OFDM waveform component and the second waveform component is a filter bank multicarrier FBMC waveform component.

16. The method according to claim 15, wherein a subcarrier interval corresponding to the FBMC waveform component is an integer multiple of a subcarrier interval corresponding to the OFDM waveform component.

17. The method according to any one of claims 14 to 16, wherein the generating a time domain signal from the M frequency domain symbols and the N frequency-domain-filtered frequency domain symbols comprises:

generating a time domain signal containing L time domain symbols from the M frequency domain symbols and the N frequency-domain-filtered frequency domain symbols, wherein L is less than a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

18. The method according to claim 17, wherein L is a positive integer greater than 1, and the generating a time domain signal from the M frequency domain symbols and the N frequency-domain-filtered frequency domain symbols comprises:

performing an inverse Fourier transform on the M frequency domain symbols and the N frequency-domain-filtered frequency domain symbols to generate the L time domain symbols; performing a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, wherein the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that comprises the any waveform related to the $a^{th}$ time domain symbol; and

performing a superposition operation on the first time domain symbol and the L-1 shifted time domain symbols of the L time domain symbols to generate the time domain signal.

**19.** The method according to any one of claims 14 to 18, wherein the subcarriers corresponding to the first waveform component and the subcarriers corresponding to the second waveform component are different basic subcarriers in a same basic subcarrier group.

**20.** The method according to claim 19, wherein there is an interval of at least r1+r2-1 basic subcarriers between the subcarriers corresponding to the first waveform component and the subcarriers corresponding to the second waveform component, wherein r1 is a positive integer indicating that a subcarrier interval corresponding to the first waveform component is equivalent to an interval of r1 basic subcarriers, and r2 is a positive integer indicating that a subcarrier interval corresponding to the second waveform component is equivalent to an interval of r2 basic subcarriers.

**21.** The method according to claim 19 or 20, wherein the first waveform component is an orthogonal frequency division multiplexing OFDM waveform component, and a subcarrier interval corresponding to the OFDM waveform component is an interval of one basic subcarrier; or the second waveform component is a filter bank multicarrier FBMC waveform component, and a subcarrier interval corresponding to the FBMC waveform component is an interval of r basic subcarriers, wherein r is an overlap coefficient of a prototype filter corresponding to the FBMC waveform component, and r is a positive integer.

**22.** The method according to claim 18, wherein the method further comprises sending shift operation information to a receive side.

**23.** A method for processing a frequency division multi-waveform signal, comprising:

Determining a receive time point of a time domain signal comprising a first waveform component and a second waveform component;
receiving the time domain signal according to the receive time point;
generating a frequency domain signal from the time domain signal, wherein the frequency domain signal comprises M frequency domain symbols corresponding to the first waveform component;
performing frequency domain filtering on data on subcarriers corresponding to the second waveform component of the frequency domain signal, to obtain N frequency domain symbols corresponding to the second waveform component; and
performing signal detection on the M frequency domain symbols and the N frequency-domain-filtered frequency domain symbols to obtain information carried in the time domain signal.

**24.** The method according to claim 23, wherein the first waveform component is an orthogonal frequency division multiplexing OFDM waveform component and the second waveform component is a filter bank multicarrier FBMC waveform component.

**25.** The method according to claim 23 or 24, wherein before the determining a receive time point of a time domain signal comprising a first waveform component and a second waveform component, the method further comprises:

receiving shift operation information regarding the time domain signal comprising the first waveform component and the second waveform component, wherein the shift operation information is sent by a transmit side; and
the determining a receive time point of a time domain signal comprising a first waveform component and a second waveform component comprises:

determining the receive time point of the time domain signal according to the shift operation information.

**26.** A transmit side device, comprising:

a mapping unit, configured to map first-type to-be-sent data streams to subcarriers corresponding to a first waveform component to generate M frequency domain symbols, and map second-type to-be-sent data streams to subcarriers corresponding to a second waveform component to generate N frequency domain symbols, wherein M and N are both positive integers;
a frequency domain filtering unit, configured to perform frequency domain filtering on the M frequency domain symbols and the N frequency domain symbols; and
a generation unit, configured to generate a time domain signal from the M frequency-domain-filtered frequency domain symbols and the N frequency-domain-filtered frequency domain symbols.

**27.** The transmit side device according to claim 26, wherein the first waveform component is a first filter bank multicarrier FBMC waveform component and the second waveform component is a second FBMC waveform component.

**28.** The transmit side device according to claim 26 or 27, wherein

the generation unit is specifically configured to generate a time domain signal containing L time domain symbols from the M frequency-domain-filtered frequency domain symbols and the N frequency-domain-filtered frequency domain symbols, wherein L is less than or equal to a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

29. The transmit side device according to claim 28, wherein L is a positive integer greater than 1, and the generation unit is specifically configured to:

perform an inverse Fourier transform on the M frequency-domain-filtered frequency domain symbols and the N frequency-domain-filtered frequency domain symbols to generate the L time domain symbols;
perform a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, wherein the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that comprises the any waveform related to the $a^{th}$ time domain symbol; and
perform a superposition operation on the first time domain symbol and the L-1 shifted time domain symbols of the L time domain symbols to generate the time domain signal.

30. The transmit side device according to any one of claims 26 to 29, wherein a subcarrier interval corresponding to the first waveform component is different from a subcarrier interval corresponding to the second waveform.

31. The transmit side device according to any one of claims 26 to 30, wherein the subcarriers corresponding to the first waveform component and the subcarriers corresponding to the second waveform component are different basic subcarriers in a same basic subcarrier group.

32. The transmit side device according to claim 31, wherein there is an interval of at least r1+r2-1 basic subcarriers between the subcarriers corresponding to the first waveform component and the subcarriers corresponding to the second waveform component, wherein r1 is a positive integer indicating that the subcarrier interval corresponding to the first waveform component is equivalent to an interval of r1 basic subcarriers, and r2 is a positive integer indicating that the subcarrier interval corresponding to the second waveform component is equivalent to an interval of r2 basic subcarriers.

33. The transmit side device according to claim 31 or 32, wherein the first waveform component is a first filter bank multicarrier FBMC waveform component, and a subcarrier interval corresponding to the first FBMC waveform component is an interval of r basic subcarriers, wherein r is an overlap coefficient of a prototype filter corresponding to the first FBMC waveform component, and r is a positive integer.

34. The transmit side device according to claim 29, wherein the transmit side device further comprises:

a sending unit, configured to send shift operation information to a receive side.

35. A receive side device, comprising:

a determining unit, configured to determine a receive time point of a time domain signal comprising a first waveform component and a second waveform component;
a receiving unit, configured to receive the time domain signal according to the receive time point;
a generation unit, configured to generate a frequency domain signal from the time domain signal;
a frequency domain filtering unit, configured to perform frequency domain filtering on data on all subcarriers of the frequency domain signal to obtain M frequency domain symbols corresponding to the first waveform component and N frequency domain symbols corresponding to the second waveform component, wherein M and N are both positive integers; and
a signal detection unit, configured to perform signal detection on the M frequency domain symbols and the N frequency domain symbols to obtain information carried in the time domain signal.

36. The receive side device according to claim 35, wherein the first waveform component is a first filter bank multicarrier FBMC waveform component and the second waveform component is a second FBMC waveform component.

37. The receive side device according to claim 36, wherein the frequency domain filtering unit is specifically configured to:

perform frequency domain filtering on data on subcarriers corresponding to the first FBMC waveform component by using a prototype filter corresponding to the first FBMC waveform component, to obtain the M frequency domain symbols corresponding to the first FBMC waveform component; and
perform frequency domain filtering on data on subcarriers corresponding to the second FBMC waveform component by using a prototype filter corresponding to the second FBMC waveform component, to obtain the N frequency domain symbols corresponding to the second FBMC waveform component.

38. The receive side device according to any one of claims 35 to 37, wherein
the receiving unit is further configured to receive shift operation information regarding the time domain signal comprising the first waveform component and the second waveform component, wherein the shift operation information is sent by a transmit side; and
the determining unit is specifically configured to determine the receive time point of the time domain signal according to the shift operation information.

39. A transmit side device, comprising:

a mapping unit, configured to map first-type to-be-sent data streams to subcarriers corresponding to a first waveform component to generate M frequency domain symbols, and map second-type to-be-sent data streams to subcarriers corresponding to a second waveform component to generate N frequency domain symbols, wherein M and N are both positive integers;
a frequency domain filtering unit, configured to perform frequency domain filtering on the N frequency domain symbols; and
a generation unit, configured to generate a time domain signal from the M frequency domain symbols and the N frequency-domain-filtered frequency domain symbols.

40. The transmit side device according to claim 39, wherein the first waveform component is an orthogonal frequency division multiplexing OFDM waveform component and the second waveform component is a filter bank multicarrier FBMC waveform component.

41. The transmit side device according to claim 40, wherein a subcarrier interval corresponding to the FBMC waveform component is an integer multiple of a subcarrier interval corresponding to the OFDM waveform component.

42. The transmit side device according to any one of claims 39 to 41, wherein
the generation unit is specifically configured to generate a time domain signal containing L time domain symbols from the M frequency domain symbols and the N frequency-domain-filtered frequency domain symbols, wherein L is less than a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

43. The transmit side device according to claim 42, wherein L is a positive integer greater than 1, and the generation unit is specifically configured to:

perform an inverse Fourier transform on the M frequency domain symbols and the N frequency-domain-filtered frequency domain symbols to generate the L time domain symbols;
perform a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, wherein the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that comprises the any waveform related to the $a^{th}$ time domain symbol; and
perform a superposition operation on the first time domain symbol and the L-1 shifted time domain symbols of the L time domain symbols to generate the time domain signal.

44. The transmit side device according to any one of claims 39 to 43, wherein the subcarriers corresponding to the first waveform component and the subcarriers corresponding to the second waveform component are different basic subcarriers in a same basic subcarrier group.

45. The transmit side device according to claim 44, wherein there is an interval of at least r1+r2-1 basic subcarriers between the subcarriers corresponding to the first waveform component and the subcarriers corresponding to the second waveform component, wherein r1 is a positive integer indicating that a subcarrier interval corresponding to the first waveform component is equivalent to an interval of r1 basic subcarriers, and r2 is a positive integer indicating that a subcarrier interval corresponding to the second waveform component is equivalent to an interval of r2 basic subcarriers.

46. The transmit side device according to claim 44 or 45, wherein
the first waveform component is an orthogonal frequency division multiplexing OFDM waveform component, and a subcarrier interval corresponding to the OFDM waveform component is an interval of one basic subcarrier; or
the second waveform component is a filter bank multicarrier FBMC waveform component, and a subcarrier interval corresponding to the FBMC waveform component is an interval of r basic subcarriers, wherein r is an overlap coefficient of a prototype filter corresponding to the FBMC waveform component, and r is a positive integer.

47. The transmit side device according to claim 43, wherein the transmit side device further comprises:

a sending unit, configured to send shift operation information to a receive side.

48. A receive side device, comprising:

a determining unit, configured to determine a receive time point of a time domain signal comprising a first waveform component and a second waveform component;
a receiving unit, configured to receive the time domain signal according to the receive time point;
a generation unit, configured to generate a frequency domain signal from the time domain signal, wherein the frequency domain signal comprises M frequency domain symbols corresponding to the first waveform component;
a frequency domain filtering unit, configured to perform frequency domain filtering on data on subcarriers corresponding to the second waveform component of the frequency domain signal, to obtain N frequency domain symbols corresponding to the second waveform component; and
a signal detection unit, configured to perform signal detection on the M frequency domain symbols and the N frequency-domain-filtered frequency domain symbols to obtain information carried in the time domain signal.

49. The receive side device according to claim 48, wherein the first waveform component is an orthogonal frequency division multiplexing OFDM waveform component and the second waveform component is a filter bank multicarrier FBMC waveform component.

50. The receive side device according to claim 48 or 49, wherein
the receiving unit is further configured to receive shift operation information regarding the time domain signal comprising the first waveform component and the second waveform component, wherein the shift operation information is sent by a transmit side; and
the determining unit is specifically configured to determine the receive time point of the time domain signal according to the shift operation information.

51. A transmit side device, comprising a memory and a processor, wherein the memory is configured to store a set of code, and the code is used to control the processor to execute the following actions:

mapping first-type to-be-sent data streams to subcarriers corresponding to a first waveform component to generate M frequency domain symbols, and mapping second-type to-be-sent data streams to subcarriers corresponding to a second waveform component to generate N frequency domain symbols, wherein M and N are both positive integers;
performing frequency domain filtering on the M frequency domain symbols and the N frequency domain symbols; and
generating a time domain signal from the M frequency-domain-filtered frequency domain symbols and the N frequency-domain-filtered frequency domain symbols.

52. The transmit side device according to claim 51, wherein the first waveform component is a first filter bank multicarrier FBMC waveform component and the second waveform component is a second FBMC waveform component.

53. The transmit side device according to claim 51 or 52, wherein
the processor is specifically configured to generate a time domain signal containing L time domain symbols from the M frequency-domain-filtered frequency domain symbols and the N frequency-domain-filtered frequency domain symbols, wherein L is less than or equal to a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

54. The transmit side device according to claim 53, wherein L is a positive integer greater than 1, and the processor is specifically configured to:

perform an inverse Fourier transform on the M frequency-domain-filtered frequency domain symbols and the N frequency-domain-filtered frequency domain symbols to generate the L time domain symbols;
perform a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, wherein the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that comprises the any waveform related to the $a^{th}$ time domain symbol; and
perform a superposition operation on the first time domain symbol and the L-1 shifted time domain symbols of the L time domain symbols to generate the time domain signal.

55. The transmit side device according to any one of claims 51 to 54, wherein a subcarrier interval corresponding to the first waveform component is different from a subcarrier interval corresponding to the second waveform.

56. The transmit side device according to any one of claims 51 to 55, wherein the subcarriers corresponding to the first waveform component and the subcarriers corresponding to the second waveform component are different basic subcarriers in a same basic subcarrier group.

57. The transmit side device according to claim 56, wherein there is an interval of at least r1+r2-1 basic subcarriers between the subcarriers corresponding to the first waveform component and the subcarriers corresponding to the second waveform component, wherein r1 is a positive integer indicating that the subcarrier interval corresponding to the first waveform component is equivalent to an interval of r1 basic subcarriers, and r2 is a positive integer indicating that the subcarrier interval corresponding to the second waveform component is equivalent to an interval of r2 basic subcarriers.

58. The transmit side device according to claim 56 or 57, wherein the first waveform component is a first filter bank multicarrier FBMC waveform component, and a subcarrier interval corresponding to the first FBMC waveform component is an interval of r basic subcarriers, wherein r is an overlap coefficient of a prototype filter corresponding to the first FBMC waveform component, and r is a positive integer.

59. The transmit side device according to claim 54, wherein the transmit side device further comprises:

a transmitter, configured to send shift operation information to a receive side.

60. A receive side device, comprising a memory and a processor, wherein the memory is configured to store a set of code, and the code is used to control the processor to execute the following actions:

determining a receive time point of a time domain signal comprising a first waveform component and a second waveform component;
receiving the time domain signal according to the receive time point;
generating a frequency domain signal from the time domain signal;
performing frequency domain filtering on data on all subcarriers of the frequency domain signal to obtain M frequency domain symbols corresponding to the first waveform component and N frequency domain symbols corresponding to the second waveform component, wherein M and N are both positive integers; and
performing signal detection on the M frequency domain symbols and the N frequency domain symbols to obtain information carried in the time domain signal.

61. The receive side device according to claim 60, wherein the first waveform component is a first filter bank multicarrier FBMC waveform component and the second waveform component is a second FBMC waveform component.

62. The receive side device according to claim 61, wherein the processor is specifically configured to:

perform frequency domain filtering on data on subcarriers corresponding to the first FBMC waveform component by using a prototype filter corresponding to the first FBMC waveform component, to obtain the M frequency domain symbols corresponding to the first FBMC waveform component; and

perform frequency domain filtering on data on subcarriers corresponding to the second FBMC waveform component by using a prototype filter corresponding to the second FBMC waveform component, to obtain the N frequency domain symbols corresponding to the second FBMC waveform component.

63. The receive side device according to any one of claims 60 to 62, wherein the receive side device further comprises:

a receiver, configured to receive shift operation information regarding the time domain signal comprising the first waveform component and the second waveform component, wherein the shift operation information is sent by a transmit side; and
the processor is specifically configured to determine the receive time point of the time domain signal according to the shift operation information.

64. A transmit side device, comprising a memory and a processor, wherein the memory is configured to store a set of code, and the code is used to control the processor to execute the following actions:

mapping first-type to-be-sent data streams to subcarriers corresponding to a first waveform component to generate M frequency domain symbols, and mapping second-type to-be-sent data streams to subcarriers corresponding to a second waveform component to generate N frequency domain symbols, wherein M and N are both positive integers;
performing frequency domain filtering on the N frequency domain symbols; and
generating a time domain signal from the M frequency domain symbols and the N frequency-domain-filtered frequency domain symbols.

65. The transmit side device according to claim 64, wherein the first waveform component is an orthogonal frequency division multiplexing OFDM waveform component and the second waveform component is a filter bank multicarrier FBMC waveform component.

66. The transmit side device according to claim 65, wherein a subcarrier interval corresponding to the FBMC waveform component is an integer multiple of a subcarrier interval corresponding to the OFDM waveform component.

67. The transmit side device according to any one of claims 64 to 66, wherein
the processor is specifically configured to generate a time domain signal containing L time domain symbols from the M frequency domain symbols and the N frequency-domain-filtered frequency domain symbols, wherein L is less than a sum of M and N, and if a start time point of a time domain symbol corresponding to one data stream of the first-type to-be-sent data streams is the same as a start time point of a time domain symbol corresponding to one data stream of the second-type to-be-sent data streams, frequency domain symbols corresponding to the two data streams correspond to a time domain symbol of the L time domain symbols that pertains to the start time point.

68. The transmit side device according to claim 67, wherein L is a positive integer greater than 1, and the processor is specifically configured to:

perform an inverse Fourier transform on the M frequency domain symbols and the N frequency-domain-filtered frequency domain symbols to generate the L time domain symbols;
perform a shift operation on the last L-1 time domain symbols of the L time domain symbols, so that a time interval between the $a^{th}$ time domain symbol and the $b^{th}$ time domain symbol that are of the L time domain symbols is equal to a time domain symbol interval corresponding to any waveform related to the $a^{th}$ time domain symbol, wherein the $a^{th}$ time domain symbol is any time domain symbol of the L-1 time domain symbols, and the $b^{th}$ time domain symbol is a time domain symbol that precedes the $a^{th}$ time domain symbol, that is closest to the $a^{th}$ time domain symbol, and that comprises the any waveform related to the $a^{th}$ time domain symbol; and
perform a superposition operation on the first time domain symbol and the L-1 shifted time domain symbols of the L time domain symbols to generate the time domain signal.

69. The transmit side device according to any one of claims 64 to 68, wherein the subcarriers corresponding to the first waveform component and the subcarriers corresponding to the second waveform component are different basic subcarriers in a same basic subcarrier group.

70. The transmit side device according to claim 69, wherein there is an interval of at least r1+r2-1 basic subcarriers between the subcarriers corresponding to the first waveform component and the subcarriers corresponding to the second waveform component, wherein r1 is a positive integer indicating that a subcarrier interval corresponding to the first waveform component is equivalent to an interval of r1 basic subcarriers, and r2 is a positive integer indicating that a subcarrier interval corresponding to the second waveform component is equivalent to an interval of r2 basic subcarriers.

**71.** The transmit side device according to claim 69 or 70, wherein
the first waveform component is an orthogonal frequency division multiplexing OFDM waveform component, and a subcarrier interval corresponding to the OFDM waveform component is an interval of one basic subcarrier; or
the second waveform component is a filter bank multicarrier FBMC waveform component, and a subcarrier interval corresponding to the FBMC waveform component is an interval of r basic subcarriers, wherein r is an overlap coefficient of a prototype filter corresponding to the FBMC waveform component, and r is a positive integer.

**72.** The transmit side device according to claim 68, wherein the transmit side further comprises:

a transmitter, configured to send shift operation information to a receive side.

**73.** A receive side device, comprising a memory and a processor, wherein the memory is configured to store a set of code, and the code is used to control the processor to execute the following actions:

determining a receive time point of a time domain signal comprising a first waveform component and a second waveform component;
receiving the time domain signal according to the receive time point;
generating a frequency domain signal from the time domain signal, wherein the frequency domain signal comprises M frequency domain symbols corresponding to the first waveform component;
performing frequency domain filtering on data on subcarriers corresponding to the second waveform component of the frequency domain signal, to obtain N frequency domain symbols corresponding to the second waveform component; and
performing signal detection on the M frequency domain symbols and the N frequency-domain-filtered frequency domain symbols to obtain information carried in the time domain signal.

**74.** The receive side device according to claim 73, wherein the first waveform component is an orthogonal frequency division multiplexing OFDM waveform component and the second waveform component is a filter bank multicarrier FBMC waveform component.

**75.** The receive side device according to claim 73 or 74, wherein the receive side device further comprises:

a receiver, configured to receive shift operation information regarding the time domain signal comprising the first waveform component and the second waveform component, wherein the shift operation information is sent by a transmit side; and
the processor is specifically configured to determine the receive time point of the time domain signal according to the shift operation information.

Map first-type to-be-sent data streams to subcarriers corresponding to a first waveform component to generate M frequency domain symbols, and map second-type to-be-sent data streams to subcarriers corresponding to a second waveform component to generate N frequency domain symbols, where M and N are both positive integers

101

Perform frequency domain filtering on the M frequency domain symbols and the N frequency domain symbols

102

Generate a time domain signal from the M frequency-domain-filtered frequency domain symbols and the N frequency-domain-filtered frequency domain symbols

103

FIG. 1

Map first-type to-be-sent data streams to subcarriers corresponding to a first FBMC waveform component to generate M frequency domain symbols, and map second-type to-be-sent data streams to subcarriers corresponding to a second FBMC waveform component to generate N frequency domain symbols, where M and N are both positive integers greater than 1

201

Perform frequency domain filtering on the first-type to-be-sent data streams on the M frequency domain symbols by using a prototype filter corresponding to the first FBMC waveform component, and perform frequency domain filtering on the second-type to-be-sent data streams on the N frequency domain symbols by using a prototype filter corresponding to the second FBMC waveform component

202

Perform an inverse Fourier transform on the M frequency-domain-filtered frequency domain symbols and the N frequency-domain-filtered frequency domain symbols to generate L frequency division multi-waveform time domain symbols, where L is an integer greater than 1

203

Perform a shift operation on the last L–1 frequency division multi-waveform time domain symbols of the L frequency division multi-waveform time domain symbols

204

Perform a superposition operation on the first frequency division multi-waveform time domain symbol and the L–1 shifted frequency division multi-waveform time domain symbols to generate a time domain signal

205

FIG. 2

Subcarriers corresponding
to a first FBMC waveform
component

Subcarriers corresponding
to a second FBMC
waveform component

Amplitude

...　　　...　　　...

k1　　k1+4　　k1+8　　k1+12　　　　k2 k2+2 k2+4 k2+6　Frequency

•••• Denote a basic
　　　subcarrier

——— Denote a subcarrier corresponding to the first/
　　　second FBMC signal component

## FIG. 3

Subcarriers corresponding
to a first FBMC waveform
component

Subcarriers corresponding
to a second FBMC
waveform component

Amplitude

$a_1^1$　　　$a_2^1$　　　$a_3^1$　　...　　　　　　$b_1^1$　$b_2^1$　$b_3^1$　　　...

...　　　...　　　...

k1　　　k1+4　　　k1+8　　　k1+12　　　　k2 k2+2 k2+4 k2+6　Frequency

•••• Denote a basic
　　　subcarrier

——— Denote a subcarrier corresponding to the first/
　　　second FBMC signal component

## FIG. 4

M frequency domain symbols

Basic subcarriers corresponding to a first FBMC waveform component

k1

k1+4

k1+8

k1+12

$\overrightarrow{a_m^1}$ $\overrightarrow{a_m^2}$ $\overrightarrow{a_m^3}$ $\overrightarrow{a_m^4}$ $\overrightarrow{a_m^5}$ ...

N frequency domain symbols

Basic subcarriers corresponding to a second FBMC waveform component

k2

k2+2

k2+4

k2+6

$\overrightarrow{b_n^1}$ $\overrightarrow{b_n^2}$ $\overrightarrow{b_n^3}$ ...

0    $\dfrac{T}{8}$    $\dfrac{T}{4}$    $\dfrac{3T}{8}$    $\dfrac{T}{2}$

FIG. 5

FIG. 6

FIG. 7

FIG. 8

L frequency division multi-
waveform time domain          Shift
symbols                    operation

Symbol 1

Symbol 2        ⟶    T/8

Symbol 3        ⟶    T/4

Symbol 4        ⟶    3T/8

Symbol 5        ⟶    T/2

Symbol 6        ⟶    5T/8

Symbol 7        ⟶    3T/4

Symbol 8        ⟶    7T/8

...                      ...

FIG. 9

L shifted frequency division multi-waveform time
domain symbols

FIG. 10

M frequency domain symbols

Basic
subcarriers
corresponding
to a first
FBMC
waveform
component

k1

k1+4

k1+8

k1+12

$\overrightarrow{a_m^1}$  $\overrightarrow{a_m^2}$  $\overrightarrow{a_m^3}$  $\overrightarrow{a_m^4}$  $\overrightarrow{a_m^5}$  . . .

N frequency domain symbols

Basic
subcarriers
corresponding
to a second
FBMC
waveform
component

k2

k2+3

k2+6

k2+9

$\overrightarrow{b_n^1}$  $\overrightarrow{b_n^2}$  $\overrightarrow{b_n^3}$  $\overrightarrow{b_n^4}$  . . .

$0$  $\dfrac{T}{8}$  $\dfrac{T}{6}$  $\dfrac{T}{4}$  $\dfrac{T}{3}$  $\dfrac{3T}{8}$  $\dfrac{T}{2}$

FIG. 11

FIG. 12

L frequency division multi-
waveform time domain
symbols

Shift
operation

Symbol 1

Symbol 2     ⟶   T/8

Symbol 3     ⟶   T/6

Symbol 4     ⟶   T/4

Symbol 5     ⟶   T/3

Symbol 6     ⟶   3T/8

Symbol 7     ⟶   T/2

...

FIG. 13

Determine a receive time point of a time domain signal including a first waveform component and a second waveform component /1401

Receive the time domain signal according to the receive time point /1402

Generate a frequency domain signal from the time domain signal /1403

Perform frequency domain filtering on data on all subcarriers of the frequency domain signal to obtain M frequency domain symbols corresponding to the first waveform component and N frequency domain symbols corresponding to the second waveform component, where M and N are both positive integers /1404

Perform signal detection on the M frequency domain symbols and the N frequency domain symbols to obtain information carried in the time domain signal /1405

FIG. 14

Map first-type to-be-sent data streams to subcarriers corresponding to a first waveform component to generate M frequency domain symbols, and map second-type to-be-sent data streams to subcarriers corresponding to a second waveform component to generate N frequency domain symbols, where M and N are both positive integers | 1501

Perform frequency domain filtering on the N frequency domain symbols | 1502

Generate a time domain signal from the M frequency domain symbols and the N frequency-domain-filtered frequency domain symbols | 1503

FIG. 15

Map first-type to-be-sent data streams to subcarriers corresponding to an OFDM waveform component to generate M frequency domain symbols, and map second-type to-be-sent data streams to subcarriers corresponding to an FBMC waveform component to generate N frequency domain symbols, where M and N are both positive integers greater than 1      / 1601

Perform frequency domain filtering on the second-type to-be-sent data streams on the N frequency domain symbols by using a prototype filter corresponding to the FBMC waveform component      / 1602

Perform an inverse Fourier transform on the M frequency domain symbols and the N frequency-domain-filtered frequency domain symbols to generate L frequency division multi-waveform time domain symbols, where L is a positive integer greater than 1      / 1603

Perform a shift operation on the last L–1 frequency division multi-waveform time domain symbols of the L frequency division multi-waveform time domain symbols      / 1604

Perform a superposition operation on the first frequency division multi-waveform time domain symbol and the L–1 shifted frequency division multi-waveform time domain symbols to generate a time domain signal      / 1605

FIG. 16

FIG. 17

N frequency domain symbols

Basic
subcarriers
corresponding
to an FBMC
waveform
component

k1

k1+4

k1+8

k1+12

$\overrightarrow{a_m^1}$    $\overrightarrow{a_m^2}$    $\overrightarrow{a_m^3}$    $\overrightarrow{a_m^4}$    $\overrightarrow{a_m^5}$    ...

M frequency domain symbols

Basic
subcarriers
corresponding
to an OFDM
waveform
component

k2
k2+1
k2+2
k2+3

$\overrightarrow{b_n^1}$                    $\overrightarrow{b_n^2}$    ...

$0$    $\dfrac{T}{8}$    $\dfrac{T}{4}$    $\dfrac{3T}{8}$    $\dfrac{T}{2}$

FIG. 18

FIG. 19

FIG. 20

M frequency domain symbols and
N frequency-domain-filtered     Inverse Fourier     L frequency division multi-
frequency domain symbols        transform           waveform time domain symbols

$0$

$\dfrac{T}{8}$

$\dfrac{T}{4}$

$\dfrac{3T}{8}$

$\dfrac{T}{2}$

...                                                   ...

FIG. 21

L frequency division multi-
waveform time domain
symbols

Shift
operation

Symbol 1

Symbol 2 →

T/8

Symbol 3 →

T/4

Symbol 4 →

3T/8

Symbol 5 →

T/2

...

FIG. 22

Determine a receive time point of a time domain signal including a first waveform component and a second waveform component 2301

Receive the time domain signal according to the receive time point 2302

Generate a frequency domain signal from the time domain signal, where the frequency domain signal includes M frequency domain symbols corresponding to the first waveform component 2303

Perform frequency domain filtering on data on subcarriers corresponding to the second waveform component of the frequency domain signal, to obtain N frequency domain symbols corresponding to the second waveform component 2304

Perform signal detection on the M frequency domain symbols and the N frequency-domain-filtered frequency domain symbols to obtain information carried in the time domain signal 2305

FIG. 23

FIG. 24

FIG. 25

26

26A

Memory

Transmit side device

Bus system
26C

Processor 26B

**FIG. 26**

26

26A

Memory

Transmit side device

Bus system
26C

Processor 26B    Transmitter 26D

**FIG. 27**

28

Receive side device

28A
Determining unit

28E
Signal detection unit

28B
Receiving unit

28D
Frequency domain filtering unit

28C
Generation unit

FIG. 28

29

29A
Memory

Receive side device

Bus system
29C

29B
Processor

29D
Receiver

FIG. 29

```
┌─────────────────────────────────────┐
│  ┌───────────────────────────┐       │ ╴30A
│  │       Mapping unit         │       │
│  └───────────────────────────┘       │
│  ┌───────────────────────────┐       │ ╴30B
│  │  Frequency domain filtering │       │
│  │            unit             │       │
│  └───────────────────────────┘       │
│  ┌───────────────────────────┐       │ ╴30C
│  │      Generation unit        │       │
│  └───────────────────────────┘       │
│                                       │ ╴30
│        Transmit side device           │
└─────────────────────────────────────┘
```

FIG. 30

```
┌─────────────────────────────────────┐
│  ┌───────────────────────────┐       │ ╴30A
│  │       Mapping unit         │       │
│  └───────────────────────────┘       │
│  ┌───────────────────────────┐       │ ╴30B
│  │  Frequency domain filtering │       │
│  │            unit             │       │
│  └───────────────────────────┘       │
│  ┌───────────────────────────┐       │ ╴30C
│  │      Generation unit        │       │
│  └───────────────────────────┘       │
│  ┌───────────────────────────┐       │ ╴30D
│  │       Sending unit          │       │
│  └───────────────────────────┘       │ ╴30
│        Transmit side device           │
└─────────────────────────────────────┘
```

FIG. 31

32A

Memory

32

Transmit side device

Bus system
32C

32B

Processor

FIG. 32

32A

Memory

32

Transmit side device

Bus system
32C

32B

Processor

32D

Transmitter

FIG. 33

34

Receive side device

Determining unit — 34A

Signal detection unit — 34E

Receiving unit — 34B

Frequency domain filtering unit — 34D

Generation unit — 34C

FIG. 34

35

Memory — 35A

Receive side device

Bus system 35C

Processor — 35B

Receiver — 35D

FIG. 35

# INTERNATIONAL SEARCH REPORT

| International application No. |
| --- |
| PCT/CN2014/084902 |

## A. CLASSIFICATION OF SUBJECT MATTER

H04L 27/26 (2006.01) i

According to International Patent Classification (IPC) or to both national classification and IPC

## B. FIELDS SEARCHED

Minimum documentation searched (classification system followed by classification symbols)

H04L; H04J; H04W; H04Q

Documentation searched other than minimum documentation to the extent that such documents are included in the fields searched

Electronic data base consulted during the international search (name of data base and, where practicable, search terms used)

WPI, EPODOC, CNPAT, CNKI, GOOGLE: multi-carrier, waveform, multiple, frequency division, time domain, frequency domain, filter, signal, process, frequency, division, time, domain, filt

## C. DOCUMENTS CONSIDERED TO BE RELEVANT

| Category* | Citation of document, with indication, where appropriate, of the relevant passages | Relevant to claim No. |
| --- | --- | --- |
| A | CN 101044734 A (QUALCOMM INC.) 26 September 2007 (26.09.2007) the abstract, description, page 2, the third paragraph to the fifth paragraph, page 8, the third paragraph to page 10, the third paragraph, page 13, the second paragraph to page 14, the first paragraph | 1-75 |
| A | CN 1487681 A (SAMSUNG ELECTRONICS CO., LTD.) 07 April 2004 (07.04.2004) the whole document | 1-75 |
| A | CN 103812807 A (CHONGQING POSTS & TELECOMMUNICATION UNIVERSITY) 21 May 2014 (21.05.2014) the whole document | 1-75 |

☐ Further documents are listed in the continuation of Box C.   ☒ See patent family annex.

|  |  |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 05 May 2015 | 29 May 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WU, Xianghui<br><br>Telephone No. (86-10) 82245237 |

Form PCT/ISA/210 (second sheet) (July 2009)

<div align="center">

## INTERNATIONAL SEARCH REPORT
### Information on patent family members

</div>

| | | International application No. |
|---|---|---|
| | | PCT/CN2014/084902 |

| Patent Documents referred in the Report | Publication Date | Patent Family | Publication Date |
|---|---|---|---|
| CN 101044734 A | 26 September 2007 | WO 2006023705 A1 | 02 March 2006 |
| | | CA 2577331 A1 | 02 March 2006 |
| | | AR 050844 A1 | 29 November 2006 |
| | | EP 1782595 A1 | 09 May 2007 |
| | | KR 20070053760 A | 25 May 2007 |
| | | JP 2008511208 A | 10 April 2008 |
| | | EP 2252026 A2 | 17 November 2010 |
| | | US 2006039273 A1 | 23 February 2006 |
| | | TWI 425797 B | 01 February 2014 |
| | | TW 200629834 A | 16 August 2006 |
| | | TW 201414249 A | 01 April 2014 |
| | | INDELNP 200701432 E | 03 August 2007 |
| CN 1487681 A | 07 April 2004 | KR 20040029824 A | 08 April 2004 |
| CN 103812807 A | 21 May 2014 | None | |

Form PCT/ISA /210 (patent family annex) (July 2009)